# EUROPEAN PATENT SPECIFICATION

(11) **EP 2 706 318 B1**
(45) Date of publication and mention of the grant of the patent: **30.03.2016**
(21) Application number: 11865289.0
(22) Date of filing: 06.05.2011
(51) Int. Cl.: F28D 7/00, F28F 1/02, F28F 19/00, F28D 1/02, F28F 7/02, F28D 7/16, F24D 3/18, F25B 39/00, F25B 13/00, F25B 25/00, F28F 21/08

(54) **HEAT EXCHANGER AND REFRIGERATION CYCLE DEVICE PROVIDED WITH SAME**
WÄRMETAUSCHER UND KÄLTEKREISLAUFVORRICHTUNG DAMIT
ÉCHANGEUR DE CHALEUR ET DISPOSITIF À CYCLE DE RÉFRIGÉRATION ÉQUIPÉ DE CET ÉCHANGEUR

(43) Date of publication of application: 12.03.2014
(73) Proprietor: Mitsubishi Electric Corporation, Tokyo 100-8310 (JP)
(72) Inventor: SAKAI, Mizuo, Tokyo 100-8310 (JP); NAKAMUNE, Hiroaki, Tokyo 100-8310 (JP); YOSHIMURA, Susumu, Tokyo 100-8310 (JP); IKEDA, Soshi, Tokyo 100-8310 (JP); MORIMOTO, Hiroyuki, Tokyo 100-8310 (JP); HATOMURA, Takeshi, Tokyo 100-8310 (JP); UCHINO, Shinichi, Tokyo 100-8310 (JP)
(74) Representative: Sajda, Wolf E.
(86) International application number: PCT/JP2011/002553
(87) International publication number: WO 2012/153361

(56) References cited:
- EP-A1- 0 495 762
- WO-A1-2009/136277
- JP-A- 58 133 591
- JP-A- 2001 050 685
- JP-A- 2002 098 424
- JP-A- 2003 202 197
- US-A- 1 799 626
- US-A- 3 570 593

## Description

### Technical Field

The present invention relates to a heat exchanger according to the preamble of claim 1 that carries out heat exchange between a first refrigerant and a second refrigerant that are a low-temperature refrigerant or a high-temperature refrigerant and relates to a refrigeration cycle apparatus including the same. US 3 570 593 A discloses such a heat exchanger

### Background Art

In conventional heat exchangers, there is a heat exchanger that includes a first flat tube having a plurality of through holes through which a low-temperature refrigerant flows, a second flat tube having a plurality of through holes through which a high-temperature fluid flows, first headers that are connected to the both ends of the first flat tube, and second headers that are connected to the both ends of the second flat tube.

A high heat exchange performance is obtained for the heat exchanger by arranging the first flat tube and the second flat tube so that their longitudinal directions (directions of refrigerant flow) are parallel and by contact laminating the flat surfaces of the first flat tube and the second flat tube by brazing or the like (see Patent Literature 1, for example).

### Citation List

### Patent Literature

Patent Literature 1: Japanese Unexamined Patent Application Publication JP-A-2002- 340 485 (p. 8, FIG. 1)

### Summary of the Invention

### Technical Problem

However, the conventional heat exchanger joins the heat transfer tubes together, and, thus, a problem is encountered in that the joining layer acts as a thermal resistance and impairs the heat exchange performance. Furthermore, voids are likely to occur in the joining layer when carrying out brazing and joining, or the like. As such, disadvantageously, the performance is further impaired.

In addition, when a material such as copper or stainless steel is used for the first flat tube and the second flat tube with the aim of improving their anti-corrosion characteristics, a problem is encountered in that the weight thereof increases.

Still further, when the headers and the heat transfer tubes are joined together and the heat transfer tubes themselves are laminated together at the same time by brazing, control needs to be carried out such that the temperature of the overall heat exchanger is uniform and a high-precision clearance control that is suitable for the brazing and joining needs to be carried out between the headers and the tubes. As such, a problem is encountered in that the manufacturing becomes complex and difficult.

Furthermore, in the case of joining metals together, a problem is encountered in that the joining of different types of metal, such as copper and aluminum, is difficult.

The present invention is addressed to solve the above described problems and a first object thereof is to obtain a heat exchanger that is configured with refrigerant passages, through which a first refrigerant or a second refrigerant passes, that have inner wall surfaces of different metals, and that has improved heat exchange performance and to obtain a refrigeration cycle apparatus equipped with the heat exchanger.

A second object is to obtain a heat exchanger that is easy to manufacture and to obtain a refrigeration cycle apparatus equipped with the heat exchanger.

### Solution to Problem

A heat exchanger and a refrigeration cycle apparatus equipped with the heat exchanger according to claim 1.

### Advantageous Effects of the Invention

According to the present invention, regarding the first-refrigerant passages of the main body of the heat exchanger, the first-refrigerant communicating holes are penetratingly formed as an alternative to the header pipes. As such, manufacturing is relatively easy. Furthermore, the inner wall surfaces of the first-refrigerant passages and the second-refrigerant passages are made of metal. Since both are different metals, it is easier to obtain corrosion resistance when fluids with different corrosiveness are distributed.

### Brief Description of the Drawings

- FIG. 1: shows structural drawings of a heat exchanger 10 according to Embodiment 1 of the present invention.
- FIG. 2: shows diagrams illustrating a method of manufacturing the heat exchanger 10 according to Embodiment 1 of the present invention.
- FIG. 3: shows structural drawings of a heat exchanger 10a according to Embodiment 2 of the present invention.
- FIG. 4: shows structural drawings of a heat exchanger 10b according to Embodiment 3 of the present invention.
- FIG. 5: shows a structural drawing of a heat exchanger 10c according to Embodiment 4 of the present invention.
- FIG. 6: shows structural drawings of a heat exchanger 10d according to Embodiment 5 of the present invention.
- FIG. 7: shows structural drawings of a heat exchanger 10e according to Embodiment 6 of the present invention.
- FIG. 8: shows structural drawings of a heat exchanger 10f according to Embodiment 7 of the present invention.
- FIG. 9: shows cross-sectional views of a main section of a heat exchanger according to Embodiment 8 of the present invention.
- FIG. 10: shows cross-sectional views of a main section of a heat exchanger according to Embodiment 9 of the present invention.
- FIG. 11: shows cross-sectional views of a main section of a heat exchanger according to Embodiment 10 of the present invention.
- FIG. 12: is a block diagram illustrating a heat pump system, which uses heating energy, according to Embodiment 11 of the present invention.
- FIG. 13: is a block diagram illustrating another configuration of the heat pump system, which uses heating energy, according to Embodiment 11 of the present invention.
- FIG. 14: is a block diagram illustrating a heat pump system, which uses cooling energy, according to Embodiment 11 of the present invention.
- FIG. 15: is a block diagram illustrating a heat pump system, which uses cooling energy and heating energy, according to Embodiment 11 of the present invention.
- FIG. 16: is a cross-sectional view of a main section of a heat exchanger according to Embodiment 12 of the present invention.
- FIG. 17: illustrates cross-sectional views of a main section of other configurations of the heat exchanger according to Embodiment 12 of the present invention.
- FIG. 18: is a cross-sectional view of a main section of a heat exchanger according to Embodiment 13 of the present invention.

### Description of Embodiments

### Embodiment 1

### Configuration of Heat Exchanger 10

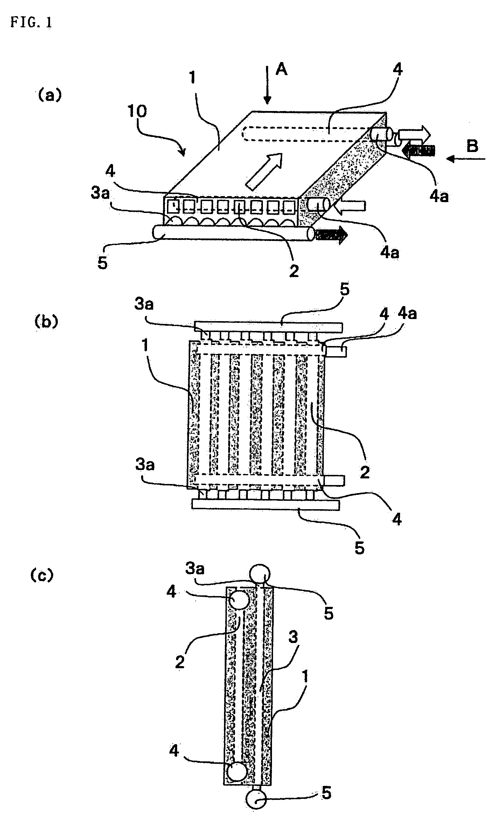

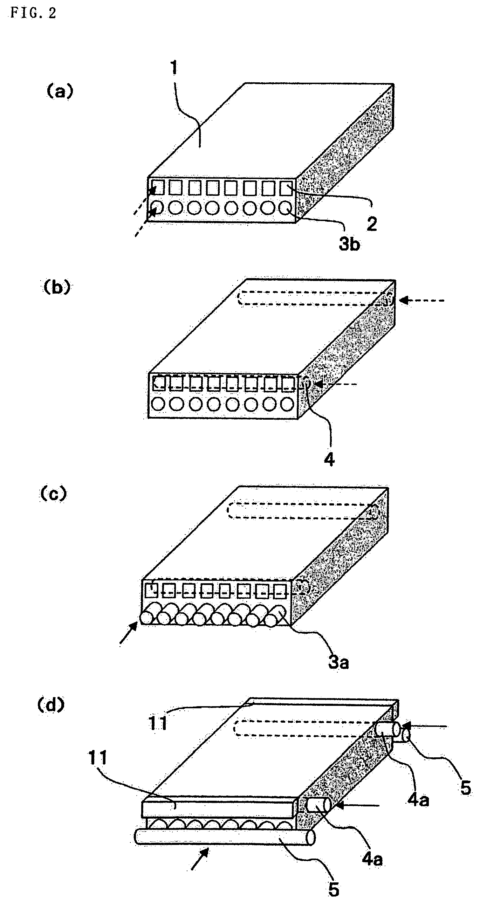

FIG. 1 shows structural drawings of a heat exchanger 10 according to Embodiment 1 of the present invention and FIG. 2 shows diagrams illustrating a method of manufacturing the heat exchanger 10. Among the structural drawings, FIG. 1(a) is a perspective view of the heat exchanger 10, FIG. 1(b) is a plan view when viewed from the arrow A direction in FIG. 1(a), and FIG. 1(c) is a side view when viewed from the arrow B direction in FIG. 1(a).

As shown in FIG. 1, in a heat transfer block 1 serving as a main body of the heat exchanger 10 according to Embodiment 1, a plurality of first-refrigerant passages 2, through which a first refrigerant (R410A or another fluorocarbon refrigerant, or a natural refrigerant such as carbon dioxide or a hydrocarbon, for example) passes, are arranged in a row so as to penetrate through the heat transfer block 1 in the longitudinal direction.

Furthermore, adjacent to each of the first-refrigerant passages 2, a plurality of second-refrigerant heat-transfer-tube insertion holes 3b (see FIG. 2) are arranged in a row so as to penetrate through the heat transfer block 1 in the longitudinal direction. The first-refrigerant passages 2 and the second-refrigerant heat-transfer-tube insertion holes 3b are formed such that the directions of penetration are parallel to each other.

Furthermore, as illustrated in FIG. 1, the cross section of the passage of each first-refrigerant passage 2 is formed in a rectangular shape and the cross section of each second-refrigerant heat-transfer-tube insertion hole 3b is formed in a circular shape. Therefore, in the heat transfer block 1, the first-refrigerant passages 2 and the second-refrigerant heat-transfer-tube insertion holes 3b are integrally formed by extrusion molding, pultrusion molding, or the like. The heat-transfer block 1 is formed of a material that has a high thermal conductivity (aluminum alloy, copper, or stainless steel, for example).

Furthermore, a second-refrigerant heat-transfer tube 3a that is made of metal different from the material of the heat transfer block 1 is inserted into each second-refrigerant heat-transfer-tube insertion hole 3b. A second refrigerant (fluorocarbon refrigerant, a natural refrigerant such as carbon dioxide or a hydrocarbon, or water such as tap water, distilled water, or brine, for example) passes inside each of the second-refrigerant heat-transfer tubes 3a (hereinafter, referred to as second-refrigerant passages 3).

Furthermore, as will be described later, after each second-refrigerant heat-transfer tube 3a has been inserted through a corresponding second-refrigerant heat-transfer-tube insertion hole 3b, the second-refrigerant heat-transfer tube 3a is joined to the inner wall surface of the second-refrigerant heat-transfer-tube insertion hole 3b in a close contact manner by tube expansion or brazing.

Furthermore, the second-refrigerant heat-transfer tube 3a is made of metal different from the material of the heat transfer block 1 and is formed of a material that has a high thermal conductivity (aluminum alloy, copper, or stainless steel, for example). Additionally, the second-refrigerant heat-transfer tube 3a is formed by, after bending a flat plate by roll forming or the like, carrying out electric resistance welding (welding) on the joints that are the both ends of this flat plate, or, the second-refrigerant heat-transfer tube 3a is fabricated by roll forming or press forming or by extrusion molding or pultrusion molding a cylinder.

Furthermore, at the both ends of the heat transfer block 1 in the refrigerant flow direction, first-refrigerant communicating holes 4 that are each in communication with all the first-refrigerant passages 2 are each formed so as to penetrate the heat transfer block 1 in the row direction of the first-refrigerant passages 2. One end of the first-refrigerant communicating hole 4 is open and is connected to a first-refrigerant connecting pipe 4a so as to be in communication with the exterior, and the other end thereof is closed with a sealing material or the like.

Note that, as illustrated in FIG. 1, the direction of penetration of each first-refrigerant communicating hole 4 does not necessarily have to be orthogonal to the orientation of each of the first-refrigerant passages 2.

Furthermore, as illustrated in FIG. 1, the first-refrigerant connecting pipes 4a, which are disposed at the both ends of the heat transfer block 1 in the flow direction, are both disposed on the same side; however, the arrangement is not limited to this, one of the first-refrigerant connecting pipes 4a may be connected on the other side, for example.

Additionally, it has been described that one end of each first-refrigerant communicating hole 4 is open and the other end thereof is closed; however, the configuration is not limited to this, both ends thereof may be open and a first-refrigerant connecting pipe 4a may be connected to each of the openings. In such a case, the first refrigerant flows into or out of the first-refrigerant connecting pipes 4a at the both ends.

Furthermore, the both ends of each second-refrigerant heat-transfer-tube 3a, which is inserted through a corresponding second-refrigerant heat-transfer-tube insertion hole 3b formed in the heat transfer block 1, are each joined by brazing or the like, along the row direction of the second-refrigerant heat-transfer tubes 3a, to a second-refrigerant communicating header pipe 5 that is in communication with all the second-refrigerant heat-transfer tubes 3a. One end of the second-refrigerant communicating header pipe 5 is open and is in communication with the exterior and the other end thereof is closed with a sealing material or the like.

Note that, as illustrated in FIG. 1, the pipe axial direction of each second-refrigerant communicating header pipe 5 does not necessarily have to be orthogonal to the pipe axial direction of each of the second-refrigerant heat-transfer tubes 3a.

Additionally, it has been described that one end of each second-refrigerant communicating header pipe 5 is open and the other end thereof is closed; however, the configuration is not limited to this, both ends thereof may be open and a second refrigerant may flow into and out of the openings of each second-refrigerant communicating header pipe 5.

Furthermore, the second-refrigerant communicating header pipe 5 corresponds to the "second-refrigerant communicating portion" of the present invention.

### Heat Exchange Operation of Heat Exchanger 10

Referring to FIG. 1, a heat exchange operation of the heat exchanger 10 carried out between the first refrigerant and the second refrigerant will be described next.

The first refrigerant flows through one of the first-refrigerant connecting pipe 4a and into the first-refrigerant communicating holes 4 corresponding thereto, passes through each of the first-refrigerant passages 2, and flows out of the other one of the first-refrigerant communicating holes 4 through the first-refrigerant connecting pipe 4a corresponding thereto. The second refrigerant flows in through the opening of one of the second-refrigerant communicating header pipes 5, passes through the second-refrigerant passages 3 that are each inside a corresponding second-refrigerant heat-transfer tube 3a, and flows out through the opening of the other one of the second-refrigerant communicating header pipes 5.

During the above, heat exchange is carried out between the first refrigerant and the second refrigerant flowing counter to each other or parallel to each other, through a partition wall between the first-refrigerant passages 2 and the second-refrigerant passages 3.

The heat exchanger 10 according to Embodiment 1 is mounted on a refrigeration cycle apparatus such as a heat pump system that uses heating energy or cooling energy.

Note that in the beat exchanger 10 illustrated in FIG. 1, the areas of the refrigerant passage of the first-refrigerant passages 2 and the second-refrigerant passages 3 are the same to some degree; however, the areas of the refrigerant passages are not limited to this. In other words, if there is a difference between the first refrigerant and the second refrigerant in their thermophysical properties such as specific heat or density, their flow rates, their pressure conditions, their fluid states, or the like, then the first-refrigerant passages 2 and the second-refrigerant passages 3 may be designed so as to have different refrigerant passage areas.

For example, when carbon dioxide or a fluorocarbon refrigerant its employed as the first refrigerant and tap water or the like, whose water quality is not controlled sufficiently, is employed as the second refrigerant, then, the refrigerant passage area of the second-refrigerant passages 3 may be larger than that of the first-refrigerant passages 2 in order to improve the heat exchange performance or to suppress increase in the pressure loss due to scaling on the inner surface of the refrigerant passages.

### Method of Manufacturing Heat Exchanger 10

Referring to FIG. 2, an outline of a method of manufacturing the heat exchanger 10 will be described next.

First, as illustrated in FIG. 2(a), the first-refrigerant passages 2 and the second-refrigerant heat-transfer-tube insertion holes 3b are integrally formed. in the heat transfer block 1 that is the main body of the heat exchanger 10 by extrusion molding, pultrusion molding, or the like.

Next, as illustrated in FIG. 2(b), at the both ends of the heat transfer block 1 in the longitudinal direction (the refrigerant flow direction), first-refrigerant communicating holes 4 that are in communication with all the first-refrigerant passages 2 are formed in the row direction of the first-refrigerant passages 2 such that the first-refrigerant communicating holes 4 are formed so as to penetrate through the first-refrigerant passages 2 by performing cutting work such as drilling or by machine work such as stamping. At this time, cutting or stamping is carried out such that the end portion of each first-refrigerant communicating hole 4 in the machine work direction is not open.

Then, as illustrated in FIG. 2(c), the second-refrigerant heat-transfer tubes 3a, through which the second refrigerant passes, are inserted into the respective second-refrigerant heat-transfer-tube insertion holes 3b, and each second-refrigerant heat-transfer tube 3a is joined to the inner wall surface of the corresponding second-refrigerant heat-transfer-tube insertion hole 3b in a close contact manner by tube expansion such as mechanical tube expansion or hydraulic tube expansion, or by brazing.

After that, as illustrated in FIG. 2(d), the first-refrigerant connecting pipes 4a are connected to the respective openings serving as inlets for the machine work of the first-refrigerant communicating holes 4. Furthermore, the both ends of each second-refrigerant heat-transfer tube 3a are each joined by brazing or the like, along the row direction of the second-refrigerant heat-transfer tubes 3a, to a corresponding second-refrigerant communicating header pipe 5 that is in communication with all the second-refrigerant heat-transfer tubes 3a. Still further, the openings of each of the first-refrigerant passages 2 formed in the heat transfer block 1 are closed by performing pinch work or by brazing sealing materials 11 (not shown in FIG. 1) thereto.

The heat exchanger 10 is manufactured by the above manufacturing method.

### Advantageous Effects of Embodiment 1

With the above configuration, the second-refrigerant heat-transfer tubes 3a through which the second refrigerant passes and that are made of metal that is different from that of the heat transfer block 1 are inserted inside the heat transfer block 1. Therefore, the metal of the refrigerant passages through which the first refrigerant flows and the metal of the refrigerant passages through which the second refrigerant flows are different, and it is possible to design a heat exchanger utilizing the characteristics of each metal.

Furthermore, regarding the joining of metals different from each other, joining can be carried out by inserting the second-refrigerant heat-transfer tubes 3a through the second-refrigerant heat-transfer-tube insertion holes 3b of the heat transfer block 1, respectively, and by carrying out tube expansion or brazing. As such, reliability can be secured.

For example, a case in which the body of the heat exchanger is formed with an aluminum material with the aim of reducing weight and reducing cost is considered. When water is used as the refrigerant, corrosiveness becomes a problem since aluminum and water have poor compatibility, oxide films of aluminum peel off, and pitting corrosion or the like occurs. In this case, by using copper pipes as the second-refrigerant heat-transfer tubes 3a through which water is passed as the refrigerant and by using aluminum for the heat transfer block 1, the problem of corrosiveness can be resolved and reduction of weight can be achieved.

At this time, a problem such as electrolytic corrosion between aluminum and copper becomes a concern; however, if the second-refrigerant heat-transfer tubes 3a are joined to the inner wall surface of the second-refrigerant heat-transfer-tube insertion holes 3b by tube expansion, no passage that is in contact with water and air is formed.

Furthermore, since the first-refrigerant passages 2 and the second-refrigerant heat-transfer-tube insertion holes 3b are integrally formed in the heat transfer block 1, when compared with a configuration in which a flat tube for each of the first-refrigerant passages 2 and a flat tube for each of the second-refrigerant passages 3 are formed as separate pieces and are joined by brazing, for example, thermal resistance can be reduced and heat exchange performance can be improved.

Additionally, since the second-refrigerant heat-transfer tubes 3a that are made of metal different from that of the heat transfer block 1 are inserted inside the heat transfer block 1, compared with a case in which the flat tube for each of the first-refrigerant passages 2 and the flat tube for each of the second-refrigerant passages 3 are formed as separate pieces and are joined by brazing, the contact area between the different metals can be increased and thermal resistance at the portions in contact can be reduced.

Still further, as for the first-refrigerant passages 2 of the heat transfer block 1, the first-refrigerant communicating holes 4 are formed so as to penetrate the heat transfer block 1 as an alternative to the header pipes. Because of this, manufacturing is relatively easy.

Note that as shown in FIGs 1 and 2, the number of the refrigerant passage of the first-refrigerant passages 2 and that of the second-refrigerant passages 3 are the same; however, the numbers of the refrigerant passages are not limited to this. In other words, the numbers may be different such that the heat exchanger has a high heat transfer performance and little pressure loss and so that the heat exchanger is ideal in accordance with the operating condition or the fluid physical property of the refrigerant of the heat exchanger 10.

### Embodiment 2

A configuration and an operation of a heat exchanger 10a according to Embodiment 2 that are different from those of the heat exchanger 10 according to Embodiment 1 will be mainly described.

### Configuration of Heat Exchanger 10a

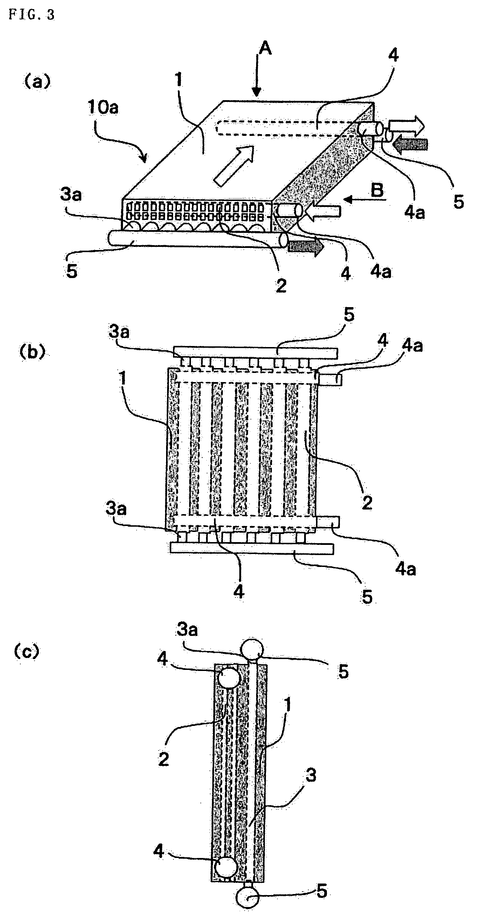

FIG. 3 shows structural drawings of the heat exchanger 10a according to Embodiment 2 of the present invention. Among the structural drawings, FIG. 3(a) is a perspective view of the heat exchanger 10a, FIG. 3(b) is a plan view when viewed from the arrow A direction in FIG. 3(a), and FIG. 3(c) is a side view when viewed from the arrow B direction in FIG. 3(a).

As illustrated in FIG. 3, in the heat transfer block 1 serving as a main body of the heat exchanger 10a according to Embodiment 2, the plurality of first-refrigerant passages 2, through which the first refrigerant passes, are formed in two rows so as to penetrate through the heat transfer block 1 in the longitudinal direction.

Furthermore, at the both ends of the heat transfer block 1 in the refrigerant flow direction, the first-refrigerant communicating holes 4 that are each in communication with all of the first-refrigerant passages 2 formed in two rows are each formed so as to penetrate the heat transfer block 1 in the row direction of the first-refrigerant passages 2. Other configurations and manufacturing method are similar to those of the heat exchanger 10 according to Embodiment 1.

Note that while the first-refrigerant passages 2 are of a two-row configuration, the configuration is not limited to this configuration, and the heat exchanger may be formed with three or more rows. When improving the heat exchange performance or when reducing pressure loss by increasing the passage area, the number of rows may be changed accordingly.

### Advantageous Effects of Embodiment 2

In addition to the advantageous effects of Embodiment 1, since the first-refrigerant passages 2 that are formed in plural rows are integrated by the first-refrigerant communicating holes 4 that are single through holes, the above described configuration allows the number of through holes to be reduced. Accordingly, the manufacturing process of the heat exchanger 10a can be simplified.

Furthermore, by integrating the first-refrigerant passages 2 that are formed in plural rows with the first-refrigerant communicating holes 4 each of them is a single through hole, the distance between the rows of the first-refrigerant passages 2 can be made closer. Accordingly, the heat exchanger 10a can be made more compact.

Note that, as illustrated in FIG. 3, while a configuration in which the first-refrigerant passages 2, through which the first refrigerant passes, are formed in rows is shown, the configuration is not limited to this configuration. In other words, the first-refrigerant passages 2 may not be formed in rows and the second-refrigerant heat-transfer tubes 3a, through which the second refrigerant passes, may be formed in rows.

In such a case, the second-refrigerant communicating header pipe 5 may be joined so as to be in communication with all of the second-refrigerant heat-transfer tubes 3a formed in rows. Furthermore, the first-refrigerant passages 2 and the second-refrigerant heat-transfer tubes 3a may both be formed in plural rows.

### Embodiment 3

A configuration and an operation of a heat exchanger 10b according to Embodiment 3 that are different from those of the heat exchanger 10 according to Embodiment 1 will be mainly described.

### Configuration of Heat Exchanger 10b

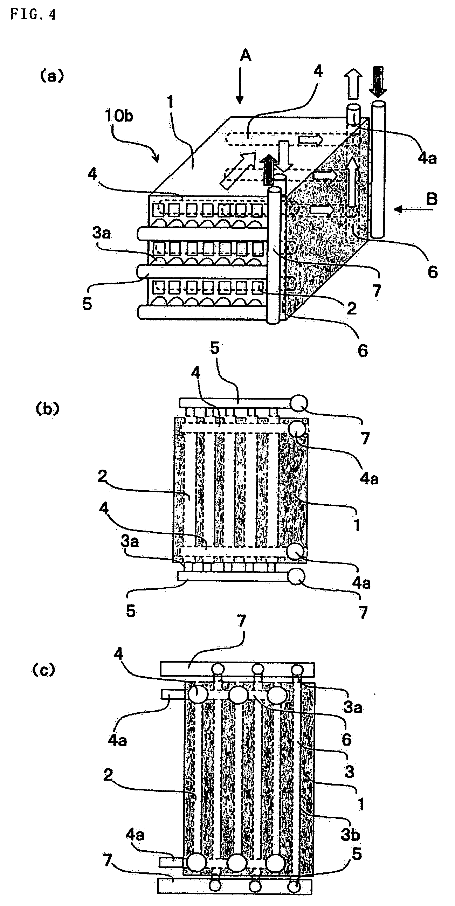

FIG. 4 shows structural drawings of the heat exchanger 10b according to Embodiment 3 of the present invention. Among the structural drawings, FIG. 4(a) is a perspective view of the heat exchanger 10b, FIG. 4(b) is a plan view when viewed from the arrow A direction in FIG. 4(a), and FIG. 4(c) is a side view when viewed from the arrow B direction in FIG. 4(a).

As illustrated in FIG. 4, a row of first-refrigerant passages 2 and a row of second-refrigerant heat-transfer-tube insertion holes 3b that penetrate through the heat transfer block 1 are formed so as to be alternately aligned in plural stages. The first-refrigerant passages 2 and the second-refrigerant heat-transfer-tube insertion holes 3b are formed such that the direction of penetration is parallel to each other. Furthermore, in the first-refrigerant passages 2 formed in plural rows, first-refrigerant communicating holes 4 that are each in communication with the first-refrigerant passages 2 in a corresponding row are formed so as to penetrate the heat transfer block 1 in the corresponding row direction of the first-refrigerant passages 2.

Different from the heat exchanger 10 according to Embodiment 1, the both ends of each first-refrigerant communicating hole 4 are closed. Furthermore, the second-refrigerant heat-transfer tubes 3a are each inserted through the corresponding one of the second-refrigerant heat-transfer-tube insertion holes 3b formed in plural rows. The second-refrigerant communicating header pipes 5, each of which is in communication with the second-refrigerant heat-transfer tubes 3a of the corresponding row, are each joined by brazing or the like to the corresponding row, along the row direction of the second-refrigerant heat-transfer tubes 3a.

Note that, as illustrated in FIG. 4, the three stages of the rows of the first-refrigerant passages 2 and the three stages of the rows of the second-refrigerant heat-transfer-tube insertion holes 3b are formed so as to be alternately aligned; however, the configuration is not limited to this configuration.

In other words, the number of rows of the first-refrigerant passages 2 and the number of rows of the second-refrigerant heat-transfer-tube insertion holes 3b do not have to be the same, and the number of rows may be each increased so as to improve the heat exchange performance or to reduce pressure loss by increasing the passage area.

Furthermore, in the row direction of the plurality of first-refrigerant communicating holes 4 formed at each of the both ends of the heat transfer block 1 in the refrigerant flow direction, first-refrigerant collecting holes 6 that are each in communication with the plurality of first-refrigerant communicating holes 4 are each formed so as to penetrate the heat transfer block 1 in the corresponding column direction of the plurality of first-refrigerant communicating holes 4. One end of the first-refrigerant collecting hole 6 is open and is connected to the corresponding first-refrigerant connecting pipe 4a so as to be in communication with the exterior, and the other end thereof is closed with a sealing material or the like.

Note that, as illustrated in FIG. 4, the direction of penetration of each first-refrigerant collecting hole 6 does not necessarily have to be orthogonal to the direction of penetration of each of the first-refrigerant communicating holes 4.

Furthermore, as illustrated in FIG. 4, the first-refrigerant connecting pipes 4a, which are disposed at the both ends of the heat transfer block 1 in the flow direction, are both disposed on the same side (the top side in FIG. 4(a)); however, the arrangement is not limited to this, one of the first-refrigerant connecting pipes 4a may be connected on the underside in FIG. 4(a), for example.

Additionally, it has been described that one end of each first-refrigerant collecting hole 6 is open and the other end thereof is closed; however, the configuration is not limited to this, both ends thereof may be open and the first-refrigerant connecting pipe 4a may be connected to each of the openings. In such a case, the first refrigerant flows into or out of the respective one of the both ends of the first-refrigerant connecting pipe 4a.

Furthermore, the first-refrigerant collecting hole 6 corresponds to the "first collecting portion" of the present invention.

Furthermore, along a column direction of the plurality of second-refrigerant communicating header pipes 5 formed at each of the both ends of each second-refrigerant heat-transfer tube 3a, second-refrigerant collecting header pipes 7, which are in communication with the plurality of second-refrigerant communicating header pipes 5, are each joined by brazing or the like. One end of the second-refrigerant collecting header pipe 7 is open and is in communication with the exterior and the other end thereof is closed with a sealing material or the like.

Note that, as illustrated in FIG. 4, the pipe axial direction of each second-refrigerant collecting header pipe 7 does not necessarily have to be orthogonal to the pipe axial direction of each of the second-refrigerant communicating header pipes 5.

Additionally, it has been described that one end of each second-refrigerant collecting header pipe 7 is open and the other end thereof is closed; however, the configuration is not limited to this, both ends thereof may be open and a second refrigerant may flow into and out of the openings of each second-refrigerant collecting header pipe 7.

Furthermore, the second-refrigerant collecting header pipe 7 corresponds to the "second collecting portion" of the present invention.

In addition, the method of manufacturing the heat exchanger 10b is in conformity to that of the heat exchanger 10 according to Embodiment 1.

### Heat Exchange Operation of Heat Exchanger 10b

Referring to FIG. 4, a heat exchange operation of the heat exchanger 10b carried out between the first refrigerant and the second refrigerant will be described next.

The first refrigerant flows into the first-refrigerant collecting hole 6 through the first-refrigerant connecting pipe 4a at one end of the refrigerant flow direction of the heat transfer block 1 and flows into each of the first-refrigerant communicating holes 4 that is in communication with this first-refrigerant collecting hole 6. The first refrigerant that has flowed into the first-refrigerant communicating holes 4 passes through the first-refrigerant passages 2 and flows into the first-refrigerant communicating holes 4 at the other end of the refrigerant flow direction of the heat transfer block 1. The first refrigerant that has flowed into the first-refrigerant communicating holes 4 is integrated by the first-refrigerant collecting hole 6 and flows out of the first-refrigerant connecting pipe 4a.

Meanwhile, the second refrigerant flows in from the opening of the second-refrigerant collecting header pipe 7 at one end of the refrigerant flow direction of the heat transfer block 1 and flows into each of the second-refrigerant communicating header pipes 5 that is in communication with this second-refrigerant collecting header pipe 7.

The second refrigerant that has flowed into the second-refrigerant communicating header pipes 5 passes through the second-refrigerant passage 3 in the second-refrigerant heat-transfer tubes 3a and flows into the second-refrigerant communicating header pipes 5 at the other end of the refrigerant flow direction of the heat transfer block 1.

The second refrigerant that has flowed into the second-refrigerant communicating header pipes 5 is integrated by the second-refrigerant collecting header pipe 7 and flows out of the opening of the second-refrigerant collecting header pipe 7.

During the above, heat exchange is carried out between the first refrigerant and the second refrigerant flowing counter to each other or parallel to each other, through a partition wall between the first-refrigerant passages 2 and the second-refrigerant passages 3.

### Advantageous Effects of Embodiment 3

In addition to the advantageous effects of Embodiment 1, in a case in which each of the refrigerant passages is formed in plural rows, since the plural rows are formed integrally, when compared with a case in which each of the rows is formed as separate pieces and are joined together, the above configuration allows the thermal resistance to be reduced and the heat exchange performance to be improved.

Note that the first-refrigerant collecting holes 6 and the second-refrigerant collecting header pipes 7 are all formed on the same side (right side in FIG. 4(b)) when viewed from the arrow direction in FIG. 4(a) (planar view); however, the arrangement is not limited to this. In other words, the first-refrigerant collecting holes 6 may be formed at any position as long as the first-refrigerant collecting holes 6 are positioned along the row direction of the first-refrigerant communicating holes 4.

Furthermore, the second-refrigerant collecting header pipes 7 may be joined at.any position as long as the second-refrigerant collecting header pipes 7 are positioned along the row direction of the second-refrigerant communicating header pipes 5.

### Embodiment 4

A configuration and an operation of a heat exchanger 10c according to Embodiment 4 that are different from those of the heat exchanger 10 according to Embodiment 1 will be mainly described.

### Configuration of Heat Exchanger 10c

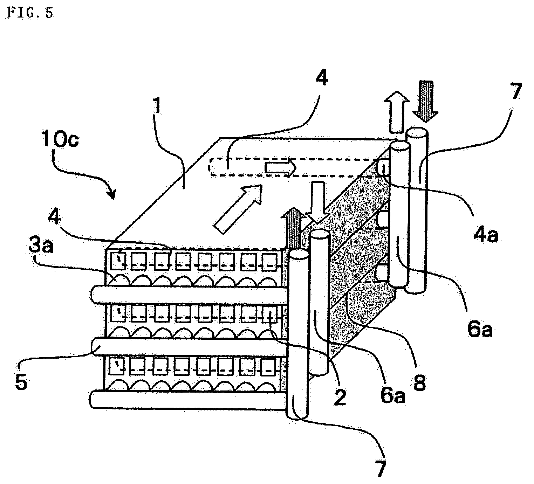

FIG. 5 shows a structural drawing of the heat exchanger 10c according to Embodiment 4 of the present invention.

As illustrated in FIG. 5, the heat exchanger 10c according to Embodiment 4 modularizes the heat transfer block 1 including a row of the first-refrigerant passages 2 that are formed so as to penetrate the heat transfer block 1 and a row of second-refrigerant heat-transfer-tube insertion holes 3b that are formed so as to penetrate the heat transfer block 1. The heat exchanger 10c is formed by stacking a plurality of these modules with a brazing layer 8 in-between.

Note that, as illustrated in FIG. 5, the modules, each serving as a heat transfer block 1, are stacked in three stages; however, the arrangement is not limited to this arrangement, and the number of stacked modules may be increased so as to improve the heat exchange performance or to reduce pressure loss by increasing the passage area. It goes without saying that the modules may be stacked in two stages.

Furthermore, as a heat transfer block 1 is stacked, a first-refrigerant collecting header pipe 6a that is in communication with the plurality of first-refrigerant connecting pipes 4a, in other words, a first-refrigerant collecting header pipe 6a that is in communication with the respective ones of the plurality of first-refrigerant communicating holes 4, is joined by brazing or the like along the row direction of the plurality of first-refrigerant connecting pipes 4a connected at each of the both ends of the heat transfer block 1 in the refrigerant flow direction.

One end of the first-refrigerant collecting header pipe 6a is open and is in communication with the exterior and the other end thereof is closed with a sealing material or the like.

Note that, as illustrated in FIG. 5, the pipe axial direction of each first-refrigerant collecting header pipe 6a does not necessarily have to be orthogonal to the pipe axial direction of each of the first-refrigerant communicating holes 4.

Additionally, it has been described that one end of each first-refrigerant collecting header pipe 6a is open and the other end thereof is closed; however, the configuration is not limited to this, both ends thereof may be open and a first refrigerant may flow into and out of the openings of each first-refrigerant collecting header pipe 6a.

Furthermore, the first-refrigerant collecting header pipe 6a corresponds to the "first collecting portion" of the present invention.

Furthermore, along the row direction of the plurality of second-refrigerant communicating header pipes 5 formed at each of the both ends of each second-refrigerant heat-transfer tubes 3a, second-refrigerant collecting header pipes 7, which are in communication with the plurality of second-refrigerant communicating header pipes 5, are each joined by grazing or the like. One end of the second-refrigerant collecting header pipe 7 is open and is in communication with the exterior and the other end thereof is closed with a sealing material or the like.

Note that, as illustrated in FIG. 5, the pipe axial direction of each second-refrigerant collecting header pipe 7 does not necessarily have to be orthogonal to the pipe axial direction of each of the second-refrigerant communicating header pipes 5.

Additionally, it has been described that one end of each second-refrigerant collecting header pipe 7 is open and the other end thereof is closed; however, the configuration is not limited to this, both ends thereof may be open and a second refrigerant may flow into and out of the openings of each second-refrigerant collecting header pipe 7.

In addition, the method of manufacturing the heat exchanger 10c is in conformity to that of the heat exchanger 10 according to Embodiment 1.

### Heat Exchange Operation of Heat Exchanger 10c

Referring to FIG. 5, a heat exchange operation of the heat exchanger 10c carried out between the first refrigerant and the second refrigerant will be described next.

The first refrigerant flows in from the opening of the first-refrigerant collecting header pipe 6a at one end of the refrigerant flow direction of the heat transfer block 1 and flows into each of the first-refrigerant connecting pipes 4a and first-refrigerant communicating holes 4 that are in communication with this first-refrigerant collecting header pipe 6a. The first refrigerant that has flowed into the first-refrigerant communicating holes 4 passes through the first-refrigerant passages 2 and flows into the first-refrigerant communicating holes 4 at the other end of the refrigerant flow direction of the heat transfer block 1.

The first refrigerant that has flowed into the first-refrigerant communicating holes 4 is integrated by the first-refrigerant collecting header pipe 6a through the first-refrigerant connecting pipes 4a and flows out of the opening of the first-refrigerant collecting header pipe 6a.

Meanwhile, the second refrigerant flows in from the opening of the second-refrigerant collecting header pipe 7 at one end of the refrigerant flow direction of the heat transfer block 1 and flows into each of the second-refrigerant communicating header pipes 5 that is in communication with this second-refrigerant collecting header pipe 7.

The second refrigerant that has flowed into the second-refrigerant communicating header pipes 5 passes through the second-refrigerant passages 3 in the second-refrigerant heat-transfer tubes 3a and flows into the second-refrigerant communicating header pipes 5 at the other end of the refrigerant flow direction of the heat transfer block 1. The second refrigerant that has flowed into the second-refrigerant communicating header pipes 5 is integrated by the second-refrigerant collecting header pipe 7 and flows out of the opening of the second-refrigerant collecting header pipe 7.

During the above, heat exchange is carried out between the first refrigerant and the second refrigerant flowing counter to each other or parallel to each other, through a partition wall between the first-refrigerant passages 2 and the second-refrigerant passages 3.

### Advantageous Effects of Embodiment 4

In addition to the advantageous effects of Embodiment 1, since the above configuration allows the heat transfer block 1 including a row of the first-refrigerant passages 2 that are formed so as to penetrate the heat transfer block 1 and a row of second-refrigerant heat-transfer-tube insertion holes 3b that are formed so as to penetrate the heat transfer block 1 to be modularized and since the number of modules may be determined and stacked on the basis of the heat exchange performance required in the heat exchanger 10c, the heat exchanger can be manufactured in accordance with the heat exchange performance in a simple manner.

Note that, in planar view of the heat exchanger 10c illustrated in FIG. 5, the first-refrigerant collecting header pipes 6a and the second-refrigerant collecting header pipes 7 are all formed on the same side (right side in planar view); however, the arrangement is not limited to this arrangement. In other words, the first-refrigerant collecting header pipes 6a may be joined at any position as long as the first-refrigerant collecting header pipes 6a are positioned along the row direction of the first-refrigerant communicating holes 4 (first-refrigerant connecting pipes 4a).
Furthermore, the second-refrigerant collecting header pipes 7 may be joined at any position as long as the second-refrigerant collecting header pipes 7 are positioned along the row direction of the second-refrigerant communicating header pipes 5.

### Embodiment 5

A configuration and an operation of a heat exchanger 10d according to Embodiment 5 that are different from those of the heat exchanger 10 according to Embodiment 1 will be mainly described.

### Configuration of Heat Exchanger 10d

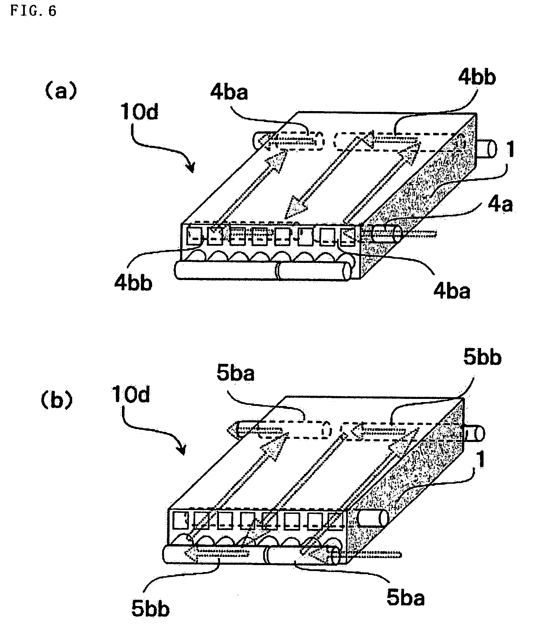

FIG. 6 shows structural drawings of the heat exchanger 10d according to Embodiment 5 of the present invention. Among the structural drawings, FIG. 6(a) is a drawing that illustrates the structure of the heat exchanger 10d as well as the flow of the first refrigerant, and FIG. 6(b) is a drawing that illustrates the structure of the heat exchanger 10d as well as the flow of the second refrigerant.

As illustrated in FIG. 6(a), at the both ends of the heat exchanger I 0d in the refrigerant flow direction according to Embodiment 5, first-refrigerant dividing-and-communicating-hole inflow-outflow portions 4ba that are each in communication with a portion of the first-refrigerant passages 2 are each formed so as to penetrate the heat transfer block 1 in the corresponding row direction of the first-refrigerant passages 2.

Furthermore, first-refrigerant dividing-and-communicating-hole turn-back portions 4bb that are in communication with the remaining first-refrigerant passages 2 are each formed so as to penetrate the heat transfer block 1 so as to be coaxial with the direction of penetration of the corresponding first-refrigerant dividing-and-communicating-hole inflow-outflow portion 4ba. Additionally, one end of each first-refrigerant dividing-and-communicating-hole-inflow-outflow portion 4ba is open and is connected to the corresponding first-refrigerant connecting pipe 4a so as to be in communication with the exterior.

Note that, as illustrated in FIG. 6, the direction of penetration of each of the first-refrigerant dividing-and-communicating-hole inflow-outflow portions 4ba and first-refrigerant dividing-and-communicating-hole turn-back portions 4bb does not necessarily have to be orthogonal to the orientation of each of the first-refrigerant passages 2.

Furthermore, as illustrated in FIG. 6, each first-refrigerant dividing-and-communicating-hole inflow-outflow portion 4ba and the corresponding first-refrigerant dividing-and-communicating-hole turn-back portion 4bb are formed such that their directions of penetration are the same and coaxial; however, their directions of penetration do not necessarily have to be the same or coaxial.

Furthermore, as illustrated in FIG. 6(b), at the both ends of the heat exchanger 10d in the refrigerant flow direction, second-refrigerant dividing header-pipe inflow-outflow 5ba that are each in communication with a portion of the corresponding second-refrigerant heat-transfer tubes 3a are each joined by brazing or the like, along the row direction of the second-refrigerant heat-transfer tubes 3a.

Additionally, second-refrigerant dividing header-pipe turn-back portions 5bb that are in communication with the remaining second-refrigerant heat-transfer tubes 3a are each joined by brazing or the like so as to be coaxial with the pipe axial direction of the corresponding second-refrigerant dividing header-pipe inflow-outflow 5ba.

Furthermore, one end of the second-refrigerant dividing header-pipe inflow-outflow 5ba is open and is in communication with the exterior and the other end thereof is closed with a sealing material or the like, and both ends of the second-refrigerant dividing header-pipe turn-back portions 5bb are closed with a stealing material of the like.

Note that, as illustrated in FIG. 6, the pipe axial direction of each of the second-refrigerant dividing header-pipe inflow-outflow 5ba and second-refrigerant dividing header-pipe turn-back portions 5bb does not necessarily have to be orthogonal to the pipe axial direction of each of the second-refrigerant heat-transfer tubes 3a.

Furthermore, as illustrated in FIG. 6, the pipe axial direction of each second-refrigerant dividing header-pipe inflow-outflow 5ba and the pipe axial direction of the corresponding second-refrigerant dividing header-pipe turn-back portion 5bb are formed such that their pipe axial directions are the same and coaxial; however, their pipe axial directions do not necessarily have to be the same or coaxial.

In addition, the method of manufacturing the heat exchanger 10d is in conformity to that of the heat exchanger 10 according to Embodiment 1.

### Heat Exchange Operation of Heat Exchange 10d

Referring to FIG. 6, a heat exchange operation of the heat exchanger 10d carried out between the first refrigerant and the second refrigerant will be described next.

The first refrigerant flows into the first-refrigerant dividing-and-communicating-hole inflow-outflow portion 4ba through the first-refrigerant connecting pipe 4a at one end of the refrigerant flow direction of the heat exchanger 10d, passes through the first-refrigerant passages 2, and flows into the first-refrigerant dividing-and-communicating-hole turn-back portion 4bb at the other end. The first refrigerant that has flowed into the first-refrigerant dividing-and-communicating-hole turn-back portion 4bb at the other end passes through the first-refrigerant passages 2 again and flows into the first-refrigerant dividing-and-communicating-hole turn-back portion 4bb at the one end.

The first refrigerant that has flowed into the first-refrigerant dividing-and-communicating-hole turn-back portion 4bb at the one end passes through the first-refrigerant passages 2 again, flows into the first-refrigerant dividing-and-communicating-hole inflow-outflow portion 4ba at the other end, and flows to the outside from the first-refrigerant connecting pipe 4a.

The second refrigerant flows in through the opening of the second-refrigerant dividing header-pipe inflow-outflow 5ba at one end of the refrigerant flow direction of the heat exchanger 10d, flows through the second-refrigerant passages 3, and flows into the second-refrigerant dividing header-pipe turn-back portion 5bb at the other end.

The second refrigerant that has flowed into the second-refrigerant dividing header-pipe turn-back portion 5bb at the other end passes through the second-refrigerant passages 3 again, and flows into the second-refrigerant dividing header-pipe turn-back portion 5bb at the one end.

The second refrigerant that has flowed into the second-refrigerant dividing header-pipe turn-back portion 5bb at the one end passes through the second-refrigerant passages 3 again, flows into the second-refrigerant dividing header-pipe inflow-outflow 5ba at the other end, and flows out of the opening of the second-refrigerant dividing header-pipe inflow-outflow 5ba.

During the above, heat exchange is carried out between the first refrigerant and the second refrigerant flowing counter to each other or parallel to each other, through a partition wall between the first-refrigerant passages 2 and the second-refrigerant passages 3.

Note that the first-refrigerant dividing-and-communicating-hole inflow-outflow portion 4ba through which the first refrigerant flows in corresponds to the "first-refrigerant dividing-and-communicating-hole inflow portion," and the first-refrigerant dividing-and-communicating-hole inflow-outflow portion 4ba through which the first refrigerant flows out corresponds to the "first-refrigerant dividing-and-communicating-hole outflow portion" of the present invention. Furthermore, the first-refrigerant dividing-and-communicating-hole turn-back portion 4bb corresponds to the "first-refrigerant dividing-and-communicatirig-hole turn-back portion" of the invention.

Additionally, the second-refrigerant dividing header-pipe inflow-outflow 5ba through which the second refrigerant flows in corresponds to the "second-refrigerant dividing-and-communicating-portion inflow portion," and the second-refrigerant dividing header-pipe inflow-outflow 5ba through which the second refrigerant flows out corresponds to the "second-refrigerant dividing-and-communicating-portion outflow portion" of the present invention. Furthermore, the second-refrigerant dividing header-pipe turn-back portion 5bb corresponds to the "second-refrigerant dividing-and-communicating-portion turn-back portion" of the invention.

### Advantageous Effects of Embodiment 5

In addition to the advantageous effects of Embodiment 1, in a case in which the passage cross-sectional area is made smaller and the refrigerant flow passage is made longer in order to maximize the heat exchange performance in accordance with the operating condition and the physical property of the refrigerant, in the above configuration, since the refrigerant flow passage can be formed to be turned back inside, the size of the heat exchanger 10d can be suppressed while the heat exchange performance is maximized.

Note that, in the heat exchanger 10d according to Embodiment 5, it has been described that, regarding the flow operations of the first refrigerant and the second refrigerant, the flow of the refrigerants are both turned back; however, the configuration is not limited to the above configuration, and the configuration may be such that one of the refrigerant flows is turned back and the other refrigerant flow is linear in a similar manner to Embodiment 1.

In such a case, a selection of which refrigerant is to have its flow turned back may be made in accordance with the operating condition and the physical property of each refrigerant of the heat exchanger so that the heat exchanger has a high heat transfer performance and little pressure loss and so that the heat exchanger is ideal.

Furthermore, each first-refrigerant dividing-and-communicating-hole inflow-outflow portion 4ba and the corresponding first-refrigerant dividing-and-communicating-hole turn-back portion 4bb of the heat exchanger 10d corresponds to a divided first-refrigerant communicating hole 4 of the heat exchanger 10 according to Embodiment 1; however, the number of division is not limited to two as illustrated in FIG. 6.

In other words, the heat exchanger may be formed such that the number of division is three or more and such that the number of turn backs of the first refrigerant is increased. In this case, depending on the mode of the division, two first-refrigerant dividing-and-communicating-hole inflow-outflow portion 4ba may be disposed at one end of the first-refrigerant passages 2 in a row direction in which the first refrigerant is made to flow in or flow out of each of the first-refrigerant dividing-and-communicating-hole inflow-outflow portions 4ba.

As such, it will be possible to further lengthen the refrigerant flow passage while keeping the size of the heat exchanger as it is; accordingly, the heat exchange performance can be improved further. The same as above applies to each of the second-refrigerant dividing header-pipe inflow-outflow 5ba and the second-refrigerant dividing header-pipe turn-back portion 5bb.

Furthermore, the configuration of turning back the refrigerant flow passage as in the heat exchanger 10d according to Embodiment 5 is also applicable to Embodiment 2 to Embodiment 4.

### Embodiment 6

A configuration and an operation of a heat exchanger 10e according to Embodiment 6 that are different from those of the heat exchanger 10b according to Embodiment 3 will be mainly described.

### Configuration of Heat Exchanger 10e

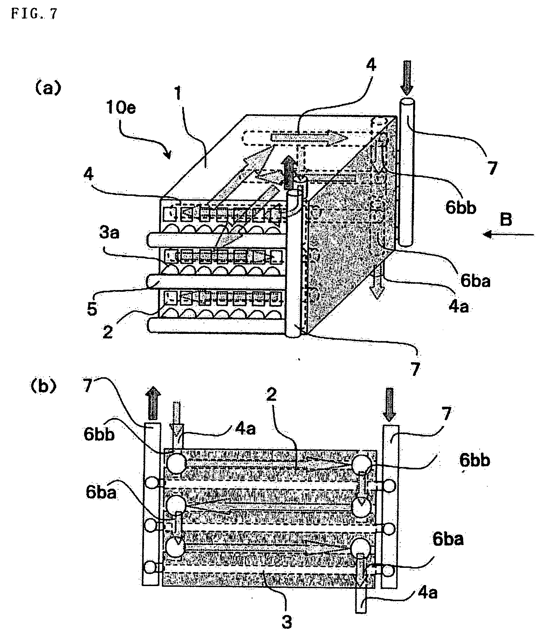

FIG. 7 shows structural drawings of the heat exchanger 10e according to Embodiment 6 of the present invention. Among the structural drawings, FIG. 7(a) is a perspective view of the heat exchanger 10e and FIG. 7(b) is a side view of the heat exchange 10e when seen from the arrow B direction.

As illustrated in FIG. 7, at the both ends of the heat exchanger 10e in the refrigerant flow direction according to Embodiment 6, first-refrigerant dividing-and-collecting-hole inflow-outflow portions 6ba that are each in communication with a portion of the first-refrigerant communicating holes 4 are each formed so as to penetrate the heat transfer block 1 in the corresponding row direction of the first-refrigerant communicating holes 4.

Furthermore, first-refrigerant dividing-and-collecting-hole turn-back portion 6bb that are in communication with the remaining first-refrigerant communicating holes 4 are each formed so as to penetrate the heat transfer-block 1 so as to be coaxial with the direction of penetration of the corresponding first-refrigerant dividing-and-collecting-hole inflow-outflow portion 6ba. Additionally, one end of the first-refrigerant dividing-and-collecting-hole inflow-outflow portion 6ba is open and is connected to a first-refrigerant connecting pipe 4a so as to be in communication with the exterior.

Specifically, the heat exchanger 10e illustrated in FIG. 7 is formed so as to penetrate the heat transfer block 1 with three first-refrigerant communicating holes 4 at each of the both ends of the heat exchanger 10e in the refrigerant flow direction. As for the first-refrigerant communicating holes 4 at the front side of FIG. 7(a), the first-refrigerant dividing-and-collecting-hole inflow-outflow portion 6ba is in communication with the first-refrigerant communicating hole 4 at the top and the first-refrigerant dividing-and-collecting-hole turn-back portion 6bb is in communication with two first-refrigerant communicating holes 4 from the bottom.

Meanwhile, as for the first-refrigerant communicating holes 4 at the back side of FIG. 7(a), the first-refrigerant dividing-and-collecting-hole turn-back portion 6bb is in communication with two first-refrigerant communicating holes 4 from the top and the first-refrigerant dividing-and-collecting-hole inflow-outflow portion 6ba is in communication with the first-refrigerant communicating hole 4 at the bottom. With the above configuration, the configuration is such that, between the two first-refrigerant communicating holes 4, one is connected to the top side of the heat exchanger 10e of FIG. 7(a), and the other one is connected to the underside thereof.

Note that, as illustrated in FIG. 7, the direction of penetration of each of the first-refrigerant dividing-and-collecting-hole inflow-outflow portions 6ba and first-refrigerant dividing-and-collecting-hole turn-back portions 6bb does not necessarily have to be orthogonal to the orientation of each of the first-refrigerant communicating holes 4.

Furthermore, as illustrated in FIG. 7, each first-refrigerant dividing-and-collecting-hole inflow-outflow portion 6ba and the corresponding first-refrigerant dividing-and-collecting-hole turn-back portion 6bb are formed such that their directions of penetration are the same and coaxial; however, their directions of penetration do not necessarily have to be the same or coaxial.

In addition, the method of manufacturing the heat exchanger 10e is in conformity to that of the heat exchanger 10 according to Embodiment 1.

### Heat Exchange Operation of Heat Exchanger 10e

Referring to FIG. 7, a heat exchange operation of the heat exchanger 10e carried out between the first refrigerant and the second refrigerant will be described next.

The first refrigerant flows into the first-refrigerant dividing-and-collecting-hole inflow-outflow portion 6ba through the first-refrigerant connecting pipe 4a at one end of the refrigerant flow direction of the heat transfer block 1 and flows into each of the first-refrigerant communicating holes 4 that is in communication with this first-refrigerant dividing-and-collecting-hole inflow-outflow portion 6ba.

The first refrigerant that has flowed into the first-refrigerant communicating hole 4 passes through the first-refrigerant passage 2 that is in communication with this first-refrigerant communicating hole 4 and flows into the first-refrigerant communicating hole 4 at the other end of the refrigerant flow direction of the heat transfer block 1.
The first refrigerant that has flowed into this first-refrigerant communicating hole 4 flows through this first-refrigerant dividing-and-collecting-hole turn-back portion 6bb that is in communication with the first-refrigerant communicating hole 4, and flows into another first-refrigerant communicating hole 4 that is in communication with the first-refrigerant dividing-and-collecting-hole turn-back portion 6bb.

The first refrigerant that has flowed into the another first-refrigerant communicating hole 4 passes through the first-refrigerant passage 2 that is in communication with this first-refrigerant communicating hole 4 and flows into the first-refrigerant communicating hole 4 at the one end of the refrigerant flow direction of the heat transfer block 1.

The first refrigerant that has flowed into this first-refrigerant communicating hole 4 flows through this first-refrigerant dividing-and-collecting-hole turn-back portion 6bb that is in communication with the first-refrigerant communicating hole 4, and flows into another first-refrigerant communicating hole 4 that is in communication with the first-refrigerant dividing-and-collecting-hole turn-back portion 6bb.

The first refrigerant that has flowed into the another first-refrigerant communicating hole 4 passes through the first-refrigerant passage 2 that is in communication with this first-refrigerant communicating hole 4 and flows into the first-refrigerant communicating hole 4 at the other end of the refrigerant flow direction of the heat transfer block 1.

The first refrigerant that has flowed into this first-refrigerant communicating hole 4 flows through the first-refrigerant dividing-and-collecting-hole inflow-outflow portion 6ba that is in communication with the first-refrigerant communicating hole 4, and flows out of the first-refrigerant connecting pipe 4a that is connected to the first-refrigerant dividing-and-collecting-hole inflow-outflow portion 6ba.

Meanwhile, the second refrigerant flows in from the opening of the second-refrigerant collecting header pipe 7 at one end of the refrigerant flow direction of the heat transfer block 1 and flows into each of the second-refrigerant communicating header pipes 5 that is in communication with this second-refrigerant collecting header pipe 7.

The second refrigerant that has flowed into the second-refrigerant communicating header pipes 5 passes through the second-refrigerant passages 3 in the second-refrigerant heat-transfer tubes 3a and flows into the second-refrigerant communicating header pipes 5 at the other end of the refrigerant flow direction of the heat transfer block 1.

The second refrigerant that has flowed into the second-refrigerant communicating header pipes 5 is integrated by the second-refrigerant collecting header pipe 7 and flows out of the opening of the second-refrigerant collecting header pipe 7.

During the above, heat exchange is carried out between the first refrigerant and the second refrigerant flowing counter to each other or parallel to each other, through a partition wall between the first-refrigerant passages 2 and the second-refrigerant passages 3.

Note that the first-refrigerant dividing-and-collecting-hole inflow-outflow portion 6ba through which the first refrigerant flows in corresponds to the "first-refrigerant dividing-and-collecting-portion inflow portion" of the present invention, and the first-refrigerant dividing-and-collecting-hole inflow-outflow portion 6ba through which the first refrigerant flows out corresponds to the "first-refrigerant dividing-and-collecting-portion outflow portion" of the present invention. Furthermore, the first-refrigerant dividing-and-collecting-hole turn-back portion 6bb corresponds to the "first-refrigerant dividing-and-collecting-portion turn-back portion" of the invention.

### Advantageous Effects of Embodiment 6

In addition to the advantageous effects of Embodiment 3, in a case in which the passage cross-sectional area is made smaller and the refrigerant flow passage is made longer in order to maximize the heat exchange performance in accordance with the operating condition and the physical property of the refrigerant, in the above configuration, since the refrigerant flow passage can be formed to be turned back inside, the size of the heat exchanger 10e can be suppressed while the heat exchange performance is maximized.

Note that each first-refrigerant dividing-and-collecting-hole inflow-outflow portion 6ba and the corresponding first-refrigerant dividing-and-collecting-hole turn-back portion 6bb of the heat exchanger 10e corresponds to a divided first-refrigerant collecting hole 6 of the heat exchanger 10b according to Embodiment 3; however, the number of division is not limited to two as illustrated in FIG. 7.

In other words, the heat exchanger may be formed such that the number of division is three or more and such that the number of turn backs of the first refrigerant is increased. In this case, rather than three rows illustrated in FIG. 7, the first refrigerant passage 2 needs to be formed in four rows or more.

Depending on the mode of the division, two first-refrigerant dividing-and-collecting-hole inflow-outflow portions 6ba are disposed at one end of the refrigerant flow direction of the heat transfer block 1 and the first refrigerant is made to flow in or flow out of each of the first-refrigerant dividing-and-collecting-hole inflow-outflow portions 6ba.

As such, it will be possible to further lengthen the refrigerant flow passage while keeping the size of the heat exchanger as it is; accordingly, the heat exchange performance can be improved further.

Furthermore, in FIG. 7, regarding the first refrigerant, the configuration is such that the first-refrigerant collecting hole is divided and the first-refrigerant dividing-and-collecting-hole inflow-outflow portion 6ba and the first-refrigerant dividing-and-collecting-hole turn-back portion 6bb are disposed; however, the configuration is not limited to this configuration.

In other words, regarding the second refrigerant, the second-refrigerant collecting header pipe 7 may be divided such that the second-refrigerant collecting header pipe 7 is divided into pipes that have functions corresponding to those of the first-refrigerant dividing-and-collecting-hole inflow-outflow portion 6ba and the first-refrigerant dividing-and-collecting-hole turn-back portion 6bb, and the second refrigerant may have its flow turned back.

It goes without saying that the configuration may allow only the second refrigerant to have its flow turned back, or the configuration may allow both the first refrigerant and second refrigerant to have their flow turned back. In such a case, among the divided second-refrigerant collecting header pipe 7, one in which the second refrigerant flows in (corresponding to the function of the first-refrigerant dividing-and-collecting-hole inflow-outflow portion 6ba) corresponds to the "second-refrigerant dividing-and-collecting-portion inflow portion" of the present invention.

Furthermore, among the divided second-refrigerant collecting header pipe 7, one in which the second refrigerant flows out (corresponding to the function of the first-refrigerant dividing-and-collecting-hole inflow-outflow portion 6ba) corresponds to the "second-refrigerant dividing-and-collecting-portion outflow portion" of the present invention.

Additionally, among the divided second-refrigerant collecting header pipe 7, the one corresponding to the function of the first-refrigerant dividing-and-collecting-hole turn-back portion 6bb corresponds to the "second-refrigerant dividing-and-collecting-portion turn-back portion" of the present invention.

Furthermore, the configuration of turning back the refrigerant flow passage as in the heat exchanger 10e according to Embodiment 6 is also applicable to Embodiment 4.

### Embodiment 7

A configuration and an operation of a heat exchanger 10f according to Embodiment 7 that are different from those of the heat exchanger 10 according to Embodiment 1 will be mainly described.

### Configuration of Heat Exchanger 10f

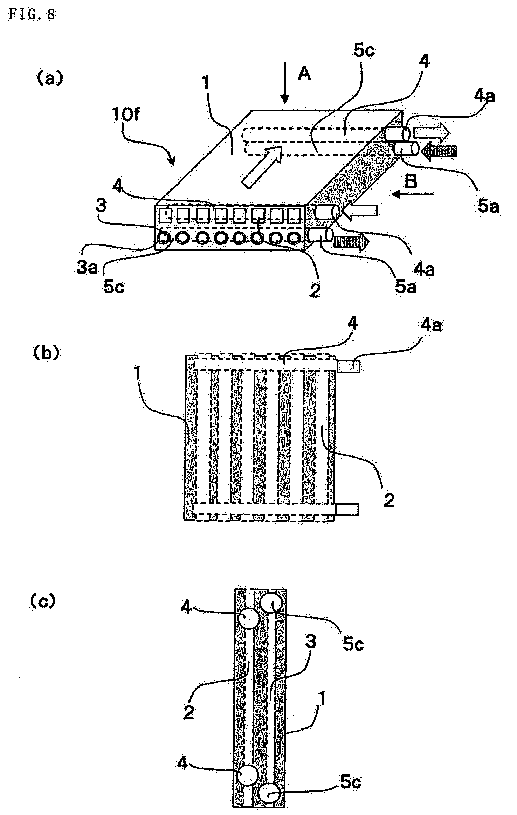

FIG. 8 shows structural drawings of the heat exchanger 10f according to Embodiment 7 of the present Invention. Along the structural drawings, FIG. 8(a) is a perspective view of the heat exchanger 10f, FIG. 8(b) is a plan view when viewed from the arrow A direction in FIG. 8(a), and FIG. 8(c) is a side view when viewed from the arrow B direction in FIG. 8(a).

As illustrated in FIG. 8, the heat exchanger 10f according to the present invention inserts the second-refrigerant heat-transfer tubes 3a through the second-refrigerant heat-transfer-tube insertion holes 3b formed in the heat transfer block 1 and, then, closes the both ends with a sealing material or the like.

Then, at the both ends of the heat transfer block 1 in the refrigerant flow direction, second-refrigerant communicating holes 5c that are each in communication with all the second-refrigerant heat-transfer tubes 3a (in other words, the second-refrigerant passages 3) are each formed so as to penetrate the heat transfer block 1 in the row direction of the first-refrigerant passages 3.

One end of each of the second-refrigerant communicating holes 5c is open and is connected to a second-refrigerant connecting pipe 5a so as to be in communication with the exterior, and the other end thereof is closed with a sealing material or the like.

Note that, as illustrated in FIG. 8, the direction of penetration of each second-refrigerant communicating hole 5c does not necessarily have to be orthogonal to the pipe axial direction of each of the second-refrigerant heat-transfer tubes 3a.

Furthermore, as illustrated in FIG. 8, the second-refrigerant connecting pipes 5a, which are disposed at the both ends of the heat transfer block 1 in the flow direction, are both disposed on the same side; however, the arrangement is not limited to this, one of the second-refrigerant connecting pipes 5a may be connected on the other side, for example.

Additionally, it has been described that one end of each second-refrigerant communicating hole 5c is open and the other end thereof is closed; however, the arrangement is not limited to this, both ends thereof may be open and the second-refrigerant connecting pipe 5a may be connected to each of the openings. In such a case, the second refrigerant flows into or out of the respective one of the both ends of the second-refrigerant connecting pipe 5.

Furthermore, the second-refrigerant communicating hole 5c corresponds to the "second-refrigerant communicating portion" of the present invention.

Furthermore, the first-refrigerant communicating holes 4 and the second-refrigerant communicating holes 5c are formed so as to be off-set slightly in the refrigerant flow direction of the first-refrigerant passages 2 (or the second-refrigerant passages 3).

In addition, the method of manufacturing the heat exchanger 10f is in conformity to that of the heat exchanger 10 according to Embodiment 1.

### Haet Exchange Operation of Heat Exchanger 10f

Referring to FIG. 8, a heat exchange operation of the heat exchanger 10f carried out between the first refrigerant and the second refrigerant will be described next.

The first refrigerant flows into the first-refrigerant communicating hole 4 through one of the first-refrigerant connecting pipes 4a, passes through each of the first-refrigerant passages 2, and flows out of the first-refrigerant communicating hole 4 through the other one of the first-refrigerant connecting pipes 4a.

The second refrigerant flows into the second-refrigerant communicating hole 5c through one of the second-refrigerant connecting pipes 5a, passes through each of the second-refrigerant passages 3 in the corresponding second-refrigerant heat-transfer tube 3a, and flows out of the second-refrigerant connecting pipe 5a through the other one of the second-refrigerant communicating holes 5c.

During the above, heat exchange is carried out between the first refrigerant and the second refrigerant flowing counter to each other or parallel to each other, through a partition wall between the first-refrigerant passages 2 and the second-refrigerant passages 3.

### Advantageous Effects of Embodiment 7

With the above configuration, similar to the first-refrigerant communicating holes 4, the second-refrigerant communicating holes 5c are provided inside the main body of the heat exchanger 10f. As such, there is no need to provide header pipes for connecting the second-refrigerant heat-transfer tubes 3a; accordingly, the heat exchanger 10f can be made more compact and the manufacturing process can be simplified.

Furthermore, the first-refrigerant communicating holes 4 and the second-refrigerant communicating holes 5c are formed so as to be off-set slightly in the refrigerant flow direction of the first-refrigerant passages 2 (or the second-refrigerant passages 3). As such, compared with a case with no off-set, the distance between the adjacent first-refrigerant passage 2 and second-refrigerant passage 3 can be shorter; accordingly, the heat exchanger 10f can be made more compact.

Note that the configuration of the heat exchanger 10f according to Embodiment 7 is also applicable to Embodiment 2 to Embodiment 6.

### Embodiment 8

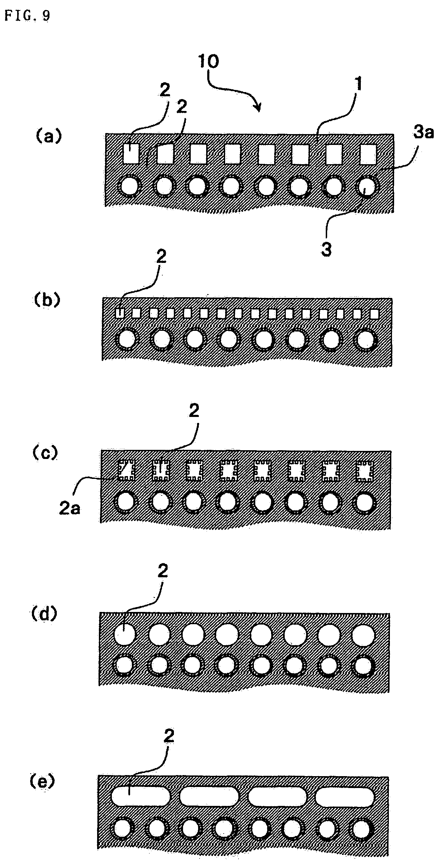

FIG. 9 shows cross-sectional views of a main section of a heat exchanger according to Embodiment 8 of the present invention. FIG. 9 illustrates variations in the shape of the first-refrigerant passages 2. The variations can be applied to each heat exchanger according to Embodiment 1 to Embodiment 7 described above; however, here, description will be given of a case in which the variation is applied to the heat exchanger 10 according to Embodiment 1.

FIG. 9(a) shows first-refrigerant passages 2 each made to have a rectangular cross-sectional passage, FIG. 9(b) shows first-refrigerant passages 2 in which the cross section of each passage is made smaller than the cross-sectional area illustrated in FIG. 9(a) and in which the cross section of each passage is made to have a rectangular shape, and FIG. 9(c) shows first-refrigerant passages 2 each formed with inner grooves 2a on the inner wall surface thereof. Furthermore, FIG. 9(d) shows first-refrigerant passages 2 each made to have a circular cross-sectional passage, and FIG. 9(e) shows first-refrigerant passages 2 each made to have an elliptical (slot-shaped) cross-sectional passage.

Each of the above passage shapes of the first-refrigerant passages 2 in cross-section illustrated in FIGs. 9(a) to 9(e) may be appropriately selected or combined such that the heat exchanger has a high heat transfer performance and little pressure loss and so that the heat exchanger is ideal in accordance with the operating condition or the fluid physical property of the refrigerant of the heat exchanger 10.

### Advantageous Effects of Embodiment 8

As configured above, by appropriately selecting the cross-sectional shape of the first-refrigerant passages 2 in accordance with the physical property of the first refrigerant, the heat transfer performance of the first refrigerant can be promoted, the pressure loss can be reduced, and the heat exchange performance can be improved.

Note that the passage shapes of the first-refrigerant passages 2 in cross-section illustrated in FIGs. 9(a) to 9(e) are illustrated by way of example and the passage shape is not limited to these shapes. It goes without saying that other shapes may be adoptable.

### Embodiment 9

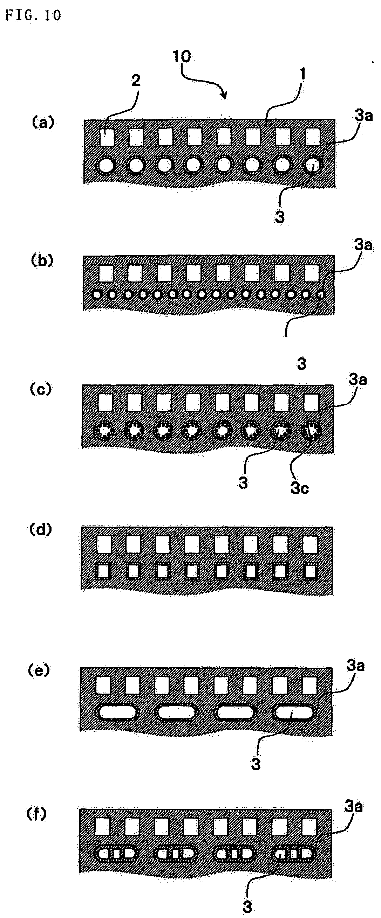

FIG. 10 shows cross-sectional views of a main section of a heat exchanger according to Embodiment 9 of the present invention. FIG. 10 illustrates variations in the shape of the second-refrigerant heat-transfer tubes 3a (second-refrigerant passages 3). The variations can be applied to each heat exchanger according to Embodiment 1 to Embodiment 7 described above; however, here, description will be given of a case in which the variation is applied to the heat exchanger 10 according to Embodiment 1.

FIG. 10(a) shows a case in which the second-refrigerant heat-transfer tubes 3a are circular tubes and in which the second-refrigerant passages 3 are each made to have a circular shape, and FIG. 10(b) shows second-refrigerant passages 3 in which the cross section of each passage is made smaller than the cross-sectional area illustrated in FIG. 10(a) and in which the cross section of each passage is made to have a circular shape.

Furthermore, FIG. 10(c) shows a case in which inner grooves 3c are formed on the passage inner wall surface of the second-refrigerant heat-transfer tubes 3a that are circular tubes, and FIG. 10(d) shows a case in which the second-refrigerant heat-transfer tubes 3a are rectangular tubes and in which the second-refrigerant passages 3 are each made to have a rectangular cross sectional passage.

Additionally, FIG. 10(e) shows a case in which the second-refrigerant heat-transfer tubes 3a are elliptical tubes (flat tubes) and in which the passage cross section of the second-refrigerant passages 3 is elliptical (slot-shaped), and FIG. 10(f) shows a case in which the second-refrigerant heat-transfer tubes 3a are elliptical tubes (flat tubes) and are multi-hole tubes.

Each of the above cross-sectional shapes of the second-refrigerant heat-transfer tubes 3a and the passage shapes of the second-refrigerant passages 3 in cross section that are illustrated in FIGs. 10(a) to 10(f) may be appropriately selected or combined such that the heat exchanger has a high heat transfer performance and little pressure loss and so that the heat exahanger is ideal in accordance with the operating condition or the fluid physical property of the refrigerant of the heat exchanger 10.

### Advantageous Effects of Embodiment 9

As configured above, by appropriately selecting the cross-sectional shape of each of the second-refrigerant heat-transfer tubes 3a and second-refrigerant passages 3 in accordance with the physical property of the second refrigerant, the heat transfer performance of the second refrigerant can be promoted, the pressure loss can be reduced, and the heat exchange performance can be improved.

Note that the cross-sectional shapes of the second-refrigerant heat-transfer tubes 3a and the passage shapes of the second-refrigerant passages 3 in cross section that are illustrated in FIGs. 10(a) to 10(f) are illustrated by way of example and the passage shape is not limited to these shapes. It goes without saying that other shapes may be adoptable.

Furthermore, the variations in the cross-sectional shapes of the second-refrigerant heat-transfer tubes 3a and that of the passage shapes of the second-refrigerant passages 3 in cross section that are illustrated in FIGs. 10(a) to 10(f) may be applied to Embodiment 8 where the variations in the shape of the first-refrigerant passage 2 are shown.

### Embodiment 10

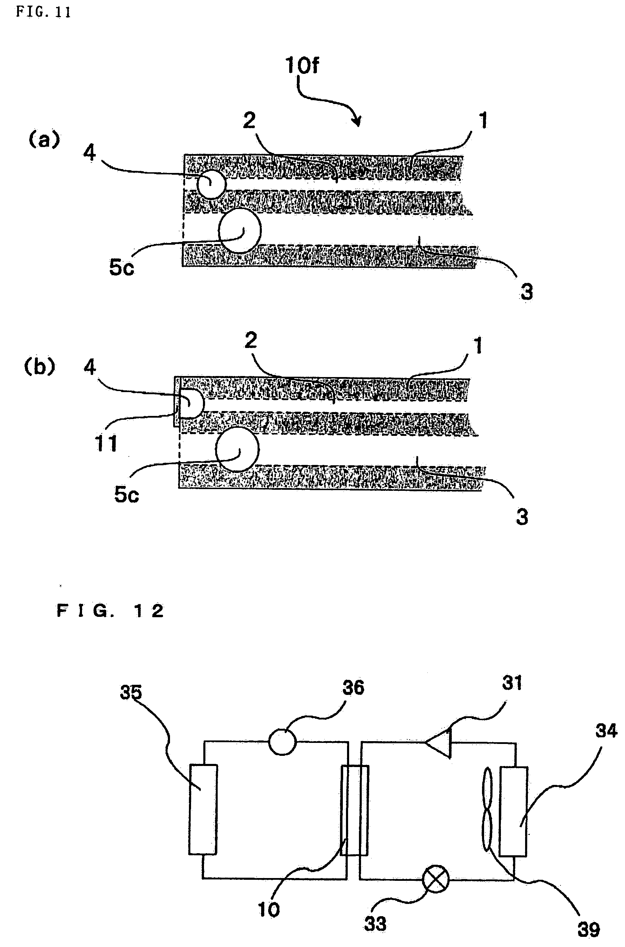

FIG. 11 shows cross-sectional views of a main section of a heat exchanger according to Embodiment 10 of the present invention. The configurations of the heat exchanger illustrated in FIG. 11 can be applied to each of the heat exchangers according to Embodiment 1 to Embodiment 7 described above; however, here, description will be given of a case in which the configuration is applied to the heat exchanger 10f according to Embodiment 7.

FIG. 11(a) illustrates a state in which the first-refrigerant communicating hole 4 of the heat exchanger 10f is formed so as to penetrate the heat transfer block 1 by machine work in the row direction of each of the first-refrigerant passages 2 so as to be in communication with each of the first-refrigerant passages 2. This has a similar mode to the first-refrigerant communicating hole 4 illustrated in Embodiment 7 (same applies to other embodiments, that is, Embodiment 1 to Embodiment 6).

Meanwhile, FIG. 11(b) illustrates a configuration of the first-refrigerant communicating hole 4 of the heat exchanger 10f according to Embodiment 10. As illustrated in FIG. 11(b), the first-refrigerant communicating hole 4 is formed as a communicating hole by machining the end portions of the refrigerant flow direction of the first-refrigerant passages 2 of the heat transfer block 1 into a cutout shape along the row direction of the first-refrigerant passages 2, and by sealing the end portions with a sealing material 11.

### Advantageous Effects of Embodiment 10

By forming first-refrigerant communicating holes 4 with the above mode, communicating holes can be formed inside the heat exchanger 10f without providing a header pipe for connecting the first-refrigerant passages 2; accordingly, the heat exchanger 10f can be made more compact.

Furthermore, compared with drilling, machining the first-refrigerant communicating holes 4 into a cutout shape allows the manufacturing to be simplified.

Note that not only the first-refrigerant communicating hole 4, the second-refrigerant communicating hole 5c illustrated in FIG. 11(b) may have a similar configuration in which the second-refrigerant communicating hole 5c is machined into a cutout shape and are sealed with a sealing material 11. However, the embodiment that can have this configuration is the heat exchanger 10f according to Embodiment 7.

### Embodiment 11

Each of the heat exchangers according to Embodiment 1 to Embodiment 10 described above is mounted on refrigeration cycle apparatuses such as, heat pump systems, air-conditioning apparatuses, hot water devices and refrigeration apparatuses. The refrigeration cycle apparatus according to Embodiment 11 will be described with a heat pump system mounted with the heat exchanger 10 according to Embodiment 1, as an example.

### Configuration of Heat Pump System (First Example)

FIG. 12 is a block diagram illustrating a heat pump system, which uses heating energy, according to Embodiment 11 of the present invention.

The heat pump system illustrated in FIG. 12 includes a first-refrigerant circuit configured with a compressor 31, a heat exchanger 10, an expansion valve 33, and an outdoor-unit heat exchanger 34 that are connected in this order with refrigerant pipes, and a second-refrigerant circuit configured witch a pump 36, use side heat exchanger 35, and the heat exchanger 10 that are connected in this order with refrigerant pipes. Furthermore, a fan 39 that sends air is disposed in the outdoor-unit heat exchanger 34.

### Operation of Heat Pump System (First Example)

As for the heat pump system illustrated in FIG. 12, an exemplary case will be described in which R410A is used as the first-refrigerant flowing through the first refrigerant circuit and in which water is used as the second refrigerant flowing through the second-refrigerant circuit.

In the first-refrigerant circuit, the first refrigerant in a gaseous state is compressed by the compressor 31 and is discharged as a high-temperature high-pressure gas refrigerant. This high-temperature high-pressure gas refrigerant flows into the heat exchanger 10 and is condensed while transferring heat to water serving as the second refrigerant.

The condensed refrigerant is expanded and decompressed by the expansion valve 33, turns into a low-temperature low-pressure two-phase gas-liquid refrigerant, and flows into the outdoor-unit beat exchanger 34. The two-phase gas-liquid refrigerant that has flowed into the outdoor-unit heat exchanger 34 exchanges heat with the air sent by the fan 39 and is evaporated, turns into a low-temperature low-pressure gas refrigerant, and is drawn into the compressor 31 again and is compressed.

In the second-refrigerant circuit, water serving as the second refrigerant that has been heated by the first refrigerant in the heat exchanger 10 is sent to the use side heat exchanger 35 by the pump 36. The water that has been sent to the use side heat exchanger 35 transfers heat to the outside. Here, the use side heat exchanger 35 is applied to a radiator or a floor heating heater, for example, and is used as a heating system.

Here, when water is used as the second refrigerant as in Embodiment 11, it is desirable to form the second-refrigerant heat-transfer tubes 3a and the second-refrigerant communicating header pipes 5 with a corrosion resistant material such as copper.

### Configuration and Operation of Heat Pump System (Second Example)

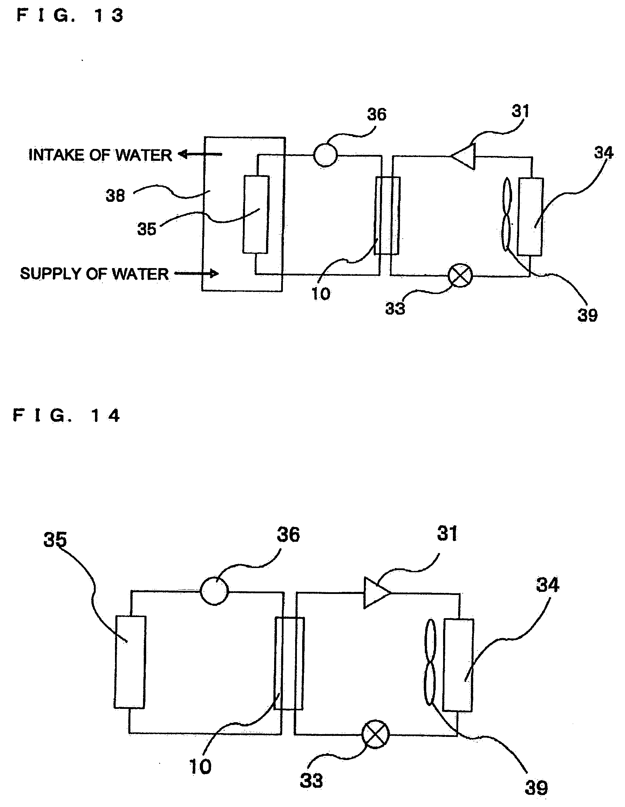

FIG. 13 is a block diagram illustrating another configuration of the heat pump system, which uses heating energy, according to Embodiment 11 of the present invention.

The heat pump system illustrated in FIG. 13 is configured as a hot water supply system that disposes a use side heat exchanger 35 of the heat pump system illustrated in FIG. 12 inside a tank 38 and that heats water that has been supplied to the tank 38 while taking in water. Other configurations are similar to that of the heat pump system illustrated in FIG. 12.

As described above, heating or supply of hot water is carried out by the use side heat exchanger 35 while the fist-refrigerant circuit serves as a heat source; accordingly, compared to conventional system having a boiler as its heat source, higher energy saving effect can be enjoyed.

### Configuration of Heat Pump System (Third Example)

FIG. 14 is a block diagram illustrating a heat pump system, which uses cooling energy, according to Embodiment 11 of the present invention.

The heat pump system illustrated in FIG. 14 is configured such that the discharge direction of the compressor 31 is in the opposite direction, in other words, the flow direction of the first refrigerant is opposite with respect to the first-refrigerant circuit of the heat pump system illustrated in FIG. 12. Other configurations are similar to that of the heat pump system illustrated in FIG. 12.

### Configuration of Heat Pump System (Third Example)

As for the heat pump system illustrated in FIG. 14, an exemplary case will be described in which R410A is used as the first-refrigerant flowing through the first refrigerant circuit and in which water is used as the second refrigerant flowing through the second-refrigerant circuit.

In the first-refrigerant circuit, the first refrigerant in a gaseous state is compressed by the compressor 31 and is discharged as a high-temperature high-pressure gas refrigerant. This high-temperature high-pressure gas refrigerant flows into the outdoor-unit heat exchanger 34, rejects heat by exchanging heat with air sent from the fan 39, and is condensed.

The condensed refrigerant is expanded and decompressed by the expansion valve 33, turns into a low-temperature low-pressure two-phase gas-liquid refrigerant, and flows into the heat exchanger 10. The two-phase gas-liquid refrigerant that has flowed into the heat exchanger 10 receives heat from water serving as the second refrigerant while being evaporated, turns into a low-temperature low-pressure gas refrigerant, and is drawn into the compressor 31 again and is compressed.

In the second-refrigerant circuit, water serving as the second refrigerant that has been cooled by the first refrigerant in the heat exchanger 10 is sent to the use side heat exchanger 35 by the pump 36. Here, the use side heat exchanger 35 is used as a cooling system by applying the use side heat exchanger 35 as an air heat exchanger or is used as a radiation cooling system by applying the use side heat exchanger 35 to a cold water panel.

### Configuration and Operation of Heat Pump System Fourth Example)

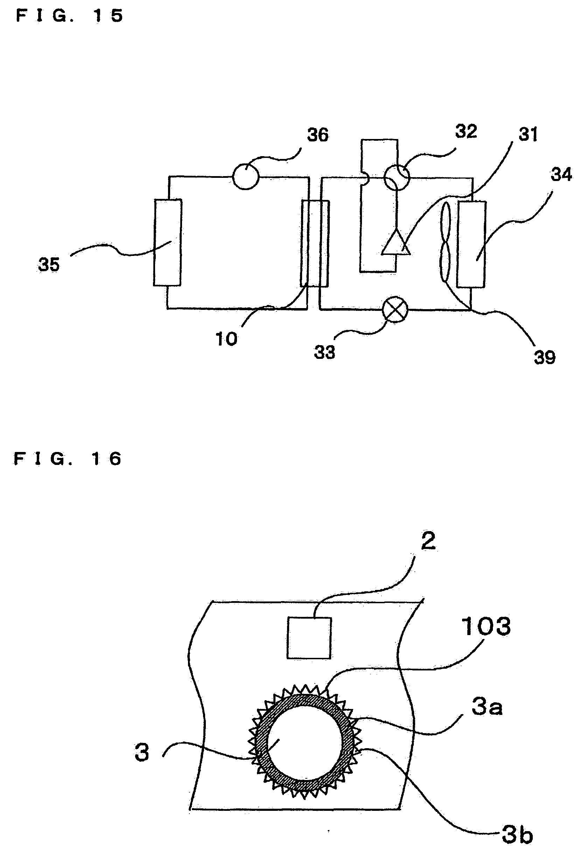

FIG. 15 is a block diagrams illustrating a heat pump system, which uses cooling energy and heating energy, according to Embodiment 11 of the present invention.

The first-refrigerant circuit of the heat pump system illustrated in FIG. 15 is configured such that refrigerants pipes sequentially connect a compressor 31, a four-way valve 32, the heat exchanger 10, the expansion valve 33, the outdoor-unit heat exchanger 34, and, again, the four-way valve. Other configurations are similar to that of the heat pump system illustrated in FIG. 12.

The heat pump-systems illustrated in FIGs. 12 to 14 each exclusively uses heating energy or cooling energy. On the other band, the heat pump system illustrated in FIG. 15 is provided with a four-way valve 32 and accordingly, the heating energy and the cooling energy can be used by switching the heating energy and the cooling energy.

Furthermore, for example, by employing the four-way valve 32 to the heat pump system illustrated in FIG. 13 the hot water supply mode and the cold water mode can be switchably used, rather than the mode exclusively for hot water supply.

### Advantageous Effects of Embodiment 11

Regarding the heat pump system illustrated in FIGs. 12 to 15, a case has been illustrated in which the heat exchanger 10 according to Embodiment 1 is applied. However, as described above, each of the heat exchangers according to Embodiment 2 to Embodiment 10 may be applied. In either case, a heat pump system having the advantageous effects illustrated in each of the Embodiment can be obtained.
In particular, because the metal of the refrigerant passage in which the first refrigerant flows and the metal of the refrigerant passage in which-the second refrigerants flows are different, it is possible to design a heat exchanger utilizing the properties of each metal.

Note that in Embodiment 11, R410A is used as the first refrigerant and water is used as the second refrigerant; however, the refrigerants are not limited to these refrigerants. That is, as the first fluid, another fluorocarbon refrigerant or a natural refrigerant such as carbon dioxide, a hydrocarbon, or the like, for example, may be employed, and as the second refrigerant, a fluorocarbon refrigerant, a natural refrigerant such as carbon dioxide, a hydrocarbon, or the like, or water such as tap water, distilled water, or brine, for example, may be employed.

### Embodiment 12

FIG. 16 shows cross-sectional views of a main section of a heat exchanger according to Embodiment 12 of the present invention. The configurations of the heat exchanger illustrated in FIG. 16 can be applied to each of the heat exchangers according to Embodiment 1 to Embodiment 7 described above; however, here, description will be given of a case in which, the configuration is applied to the heat exchanger 10 according to Embodiment 1.

As illustrated in FIG. 16, saw-tooth-shaped grooves 103 are formed on the inner surface of each second-refrigerant heat-transfer-tube insertion hole 3b through which the corresponding second-refrigerant heat-transfer tube 3a is inserted.

### Advantageous Effects of Embodiment 12

By forming the saw-tooth-shaped grooves 103 with the above mode, when each second-refrigerant heat-transfer tube 3a is expanded and is fixed in a close contact manner to the corresponding second-refrigerant heat-transfer-tube insertion hole 3b, the contact area can be increased.

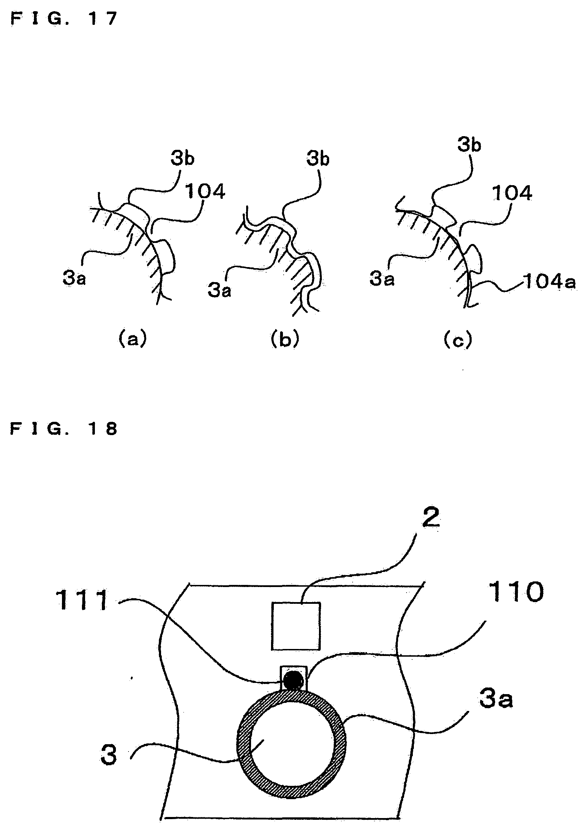

Note that the grooves may be provided on the outer surface of each second-refrigerant heat-transfer tube 3a or on both sides thereof. Furthermore, the grooves are not limited to a saw-tooth shape and may be a rough surface with a large surface roughness. Furthermore, as illustrated in FIG. 17(a), concave-convex grooves 104 may be formed on the inner surface of the second-refrigerant heat-transfer-tube insertion hole 3b.

Additionally, as illustrated in FIG. 17(b), concaves-and convenes similar to that of the concave-convex grooves 104 may also be formed on the outer surfaces of the second-refrigerant heat-transfer tubes 3a such that the conclaves and convexes of both grooves become meshed together. This allows the adhesion between each second-refrigerant heat-transfer tube 3a and the corresponding second-refrigerant heat-transfer-tube insertion hole 3b to be increased.

Furthermore, as illustrated in FIG. 17(c), if a concavity 104a is formed in the middle of each convexity of the concave-convex grooves 104, then, when expanding the second-refrigerant heat-transfer tube 3a, the convexities of the concave-convex grooves 104 can be deformed mainly in the concavity-104a thereof to adhere more to the outer surface of the second-refrigerant heat-transfer tube 3a. Accordingly, the contact area can be increased.

### Embodiment 13

FIG. 18 shows cross-sectional views of a main section of a heat exchanger according to Embodiment 13 of the present invention. The configurations of the heat exchanger illustrated in FIG. 18 can be applied to each of the heat exchangers according to Embodiment 1 to Embodiment 7 described above; however, here, description will be given of a case in which the configuration is applied to the heat exchanger 10 according to Embodiment 1.

As illustrated in FIG. 18, a brazing-material disposition groove 110 is formed on the inner surface of the second-refrigerant heat-transfer-tube insertion hole 3b along the longitudinal direction of the second-refrigerant passage 3, and a brazing material 111 I is disposed in this brazing-material installation groove 110. In Embodiment 13, a case in which the second-refrigerant heat-transfer tube 3a is fixed and joined to the second-refrigerant heat-transfer-tube insertion hole 3b by brazing is illustrated.

FIG. 18 illustrates a state, immediately before the brazing work, where the brazing material 111 is set in the brazing-material installation groove 110. Furthermore, when brazing is carried out, the brazing material 111 melts and flows into the space between the second-refrigerant heat-transfer tube 3a and the second-refrigerant heat-transfer-tube insertion hole 3b and into the brazing-material disposition groove 110 and is fixed such that the second-refrigerant heat-transfer tube 3a and the second-refrigerant heat-transfer-tube insertion hole 3b are joined together.

### Advantageous Effects of Embodiment 13

With the configuration having the above mode, a space for disposing a brazing material 111 can be secured when brazing is carried out and, thus, brazing workability is improved.

Note that the brazing-material installation groove 110 may be formed in any position in the circumferential direction of the second-refrigerant heat-transfer-tube insertion hole 36; however, if the brazing-material installation groove 110 is provided between the first-refrigerant passage 2 and the second-refrigerant heat-transfer tube 3a, thermal resistance will increase due to thermal conductivity. Accordingly, it is preferable-that the brazing-material installation groove 110 is provided at a position that is away from the portion between the first-refrigerant passage 2 and the second-refrigerant heat-transfer tube 3a. With this, the heat exchange performance can be improved.

Furthermore, the mode of the heat exchanger of Embodiment 13 may be applied to the heat exchanger according-to Embodiment 12.

### List of Reference Signs

- 1: heat transfer block:
- 2: first-refrigerant passage
- 2a: inner groove
- 3: second-refrigerant passage
- 3a: second-refrigerant heat-transfer tube
- 3b: second-refrigerant heat-transfer-tube insertion hole
- 3c: inner groove
- 4: first-refrigerant communicating hole
- 4a: first-refrigerant connecting pipe
- 4ba: first-refrigerant dividing-and-communicating-hole inflow-outflow portion
- 4bb: first-refrigerant dividing-and-communicating-hole turn-back portion
- 5: second-refrigerant communicating header pipe
- 5a: second-refrigerant connecting pipe
- 5ba: second-refrigerant dividing header-pipe inflow-outflow portion
- 5bb: second-refrigerant dividing header-pipe turn-back portion
- 5c: second-refrigerant communicating hole
- 6: first-refrigerant collecting hole
- 6a: first-refrigerant collecting header pipe
- 6a: first-refrigerant dividing-and-collecting-hole inflow-outflow portion
- 6bb: first-refrigerant dividing-and-collecting-hole turn-back portion
- 7: second-refrigerant collecting header pipe
- 8: brazing layer
- 10, 10a-10f: heat exchanger
- 11: sealing material
- 21: brazing maternal
- 31: compressor
- 32: four-way valve
- 33: expansion valve
- 34: outdoor-unit heat exchanger
- 35: use side heat exchanger
- 36: pump
- 38: tank
- 39: fan
- 103: groove
- 104: concave-convex groove
- 104a: concavity
- 110: brazing-material installation grooves
- 111: brazing material.

## Claims

1. A heat exchanger, comprising:
- a heat transfer block (1) made of metal and formed by being penetrated by a first-refrigerant passage group, the first-refrigerant passage group including a plurality of first-refrigerant passages (2) through which a first refrigerant flows, the first-refrigerant passages (2) arranged in parallel to one another and in a row;
- second-refrigerant heat-transfer tubes (3a) made of metal different from that of the heat transfer block (1) and configured to constitute a second-refrigerant passage group including a plurality of second-refrigerant passages (3) through which a second refrigerant flows, the second-refrigerant heat-transfer tubes (3a) being inserted through a plurality of second-refrigerant heat-transfer-tube insertion holes (3b) formed in parallel and in a row so as to be adjacent to the first-refrigerant passage group, the second-refrigerant heat-transfer-tube insertion holes (3b) being formed by penetrating through the heat transfer block (1);
- a second-refrigerant communicating header pipes configured to constitute second-refrigerant communicating portions (5), the second-refrigerant communicating header pipes being joined- to respective both ends of the second-refrigerant heat-transfer tubes (3a) along a row direction of the plurality of the second-refrigerant heat-transfer tubes (3a) so as to be in communication with all of the second-refrigerant heat-transfer tubes (3a); wherein the second refrigerant flows in and flows out of the second-refrigerant communicating portions (5) and flows through the second-refrigerant passage group, and an inner wall surface of the first-refrigerant passages (2) and an inner wall surface of the second-refrigerant passages (3) are made of different types of metals each other, **characterized in that**
- first-refrigerant communicating holes (4) formed at both ends of the first-refrigerant passage group in a refrigerant flow direction in heat transfer block (1) along a row direction of the plurality of the first-refrigerant passages (2), the first-refrigerant communicating holes (4) being in communication with the plurality of the first-refrigerant passages (2), wherein
- the first refrigerant flows in and flows out of the first-refrigerant communicating holes (4) and flows through the first-refrigerant passage group,
- flow directions of the first-refrigerant passage group and the second-refrigerant passage group are parallel, the first-refrigerant passage group and the second-refrigerant passage group being arranged adjacent to each other with a partition wall therebetween and exchanging heat between the first refrigerant and the second refrigerant over the partition wall.

2. The heat exchanger of claim 1,
wherein each second-refrigerant heat-transfer, tube (3a) that has been inserted through a corresponding second-refrigerant heat-transfer-tube insertion hole (3b) is expanded and is joined to an inner wall surface of the second-refrigerant heat-transfer-tube insertion hole (3b).

3. The heat exchanger of claim 1 or 2,
wherein concave-convex grooves are formed on an inner surface of each of the second-refrigerant heat-transfer-tube insertion holes (3b).

4. The heat exchanger of claim 1 or claim 3 dependent from claim 1,
wherein
- a brazing-material installation groove for disposing a brazing material is formed on an inner surface of each of the second-refrigerant heat-transfer-tube insertion holes (3b) in a longitudinal direction thereof, and
- each second-refrigerant heat-transfer-tube insertion hole (3b) and the corresponding second-refrigerant heat-transfer tube (3a) are joined together by being fixed by the brazing material flowed into a space between the second-refrigerant heat-transfer tube (3a) and the second-refrigerant heat-transfer-tube insertion hole (3b) by melting.

5. The heat exchanger of any one of claims 1 to 4,
wherein the first-refrigerant passage group is one of a plurality of first-refrigerant passage groups and the first-refrigerant passage groups are disposed adjacent to each other, and
the first-refrigerant communicating holes (4) are in communication with all of the first-refrigerant passages (2) included in the plurality of the first-refrigerant passage groups.

6. The heat exchanger of any one of claims 1 to 5,
wherein the second-refrigerant passage group is one of the plurality of second-refrigerant passage groups and the second-refrigerant passage groups are disposed adjacent to each other,
the second-refrigerant communicating portions (5) are in communication with all of the second-refrigerant passages (3) included in the plurality of the second-refrigerant passage groups.

7. The heat exchanger of any one of claims 1 to 3,
wherein
- the first-refrigerant passage group and the second-refrigerant passage group are each one of a plurality of first-refrigerant passage groups and a plurality of second-refrigerant passage groups,
- the first-refrigerant passage groups and the second-refrigerant passage groups are alternately arranged and adjacent to each other,
- the first-refrigerant communicating holes (4) are formed at the both ends of each group of the first-refrigerant passage groups in the refrigerant flow direction,
- the second-refrigerant communicating portions (5) are formed at the both ends of each group of the second-refrigerant passage groups in the refrigerant flow direction,
- first collecting portions (6) are formed in a column direction of the plurality of the first-refrigerant communicating-holes (4) that are disposed parallel at the same end of the refrigerant flow direction of the first-refrigerant passage groups, each of the first collecting portions (6) being in communication with the plurality of the first-refrigerant communicating holes (4), and second collecting portions (7) are formed in a column direction of the plurality of the second-refrigerant communicating portions (5) that are disposed parallel at the same end of the refrigerant flow direction of the second-refrigerant communicating portions (5), each of the second collecting portions (7) being in communication with the plurality of the second-refrigerant communicating portions (5),
- the first refrigerant flows in and flows out of the first collecting portion (6) and flows through the first-refrigerant communicating holes (4) and the first-refrigerant passage groups, and
- the second refrigerant flows in and flows out of the second collecting portion (7) and flows through the second-refrigerant communicating portions (5) and the second-refrigerant passage groups.

8. The heat exchanger of claim 7,
wherein the first-refrigerant passage group and the second-refrigerant passage group that are arranged adjacent to each other are configured as
a single module, and
a plurality of the modules are stacked and joined to one another.

9. The heat exchanger of claim 7 or 8,
wherein
at least one of the first collecting portions (6) that are formed at the both ends of the first-refrigerant passage groups in the refrigerant flow direction is divided into a plurality of portions,
the first collecting portions (6) include
- a first-refrigerant dividing-and-collecting-portion inflow portion (6ba) that allows the first refrigerant to flow in from an outside and allows the first refrigerant to flow through one or some of the plurality of the first-refrigerant communicating holes (4) and through the first-refrigerant passage groups that are in communication with the one or some of the plurality of the first-refrigerant communicating holes,
- one or more first-refrigerant dividing-and-collecting-portion turn-back portions (6bb) that allow the first refrigerant that has passed through part of the first-refrigerant passage groups and the first-refrigerant communicating holes (4) that are in communication with the part of the first-refrigerant passage groups to flow back through a portion of the first-refrigerant communicating holes (4) other than the one or some of the first-refrigerant communicating holes (4) and through the first-refrigerant passage groups that are in communication with the portion of the first-refrigerant communicating holes (4) other than the one or some of the first-refrigerant communicating holes, and
- a first-refrigerant dividing-and-collecting-portion outflow portion (6ba) that allows the first refrigerant that has flowed from the one or more first-refrigerant dividing-and-collecting-portion turn-back portions (6bb) through the portion of the first-refrigerant communicating holes (4) and through the first-refrigerant passage groups that are in communication with the portion of the first-refrigerant communicating holes (4) to flow out to the outside, and
- the first refrigerant flows so as to flow back through the first-refrigerant passage groups.

10. The heat exchanger of any one of claims 7 to 9,
wherein
at least one of the second collecting portions (7) that are formed at the both ends of the second-refrigerant passage groups in the refrigerant flow direction is divided into a plurality of portions,
the second collecting portions (7) include
- a second-refrigerant dividing-and-collecting-portion inflow portion that allows the second refrigerant to flow in from the outside and allows the second refrigerant to flow through one or some of the plurality of the second-refrigerant communicating portions (5) and through the second-refrigerant passage groups that are in communication with the one or some of the plurality of the second-refrigerant communicating portions (5),
- one or more second-refrigerant dividing-and-collecting-portion turn-back portions that allow the second refrigerant that has passed through part of the second-refrigerant passage groups and the second-refrigerant communicating portions (5) that are in communication with the part of the second-refrigerant passage groups to flow back through a portion of the second-refrigerant communicating portions (5) other than the one or some of the second-refrigerant communicating portions (5) and through the second-refrigerant passage groups that are in communication with the portion of the second-refrigerant communicating portions (5) other than the one or some of the second-refrigerant communicating portions (5), and
- a second-refrigerant dividing-and-collecting-portion outflow portion that allows the second refrigerant that has flowed from the one or more second-refrigerant dividing-and-collecting-portion turn-back portions through the portion of the second-refrigerant communicating portions (5) and through the second-refrigerant passage groups that are in communication with the portion of the second-refrigerant communicating portions (5) to flow out to the outside, and
- the second refrigerant flows so as to flow back through the second-refrigerant passage groups.

11. The heat exchanger of any one of claims 1 to 8,
wherein
at least one of the first-refrigerant communicating holes (4) that are formed at the both ends of the first-refrigerant passage group in the refrigerant flow direction is divided into a plurality of portions, the first-refrigerant communicating holes (4) include
- a first-refrigerant dividing-and-communicating-hole inflow portion (4ba) that allows the first refrigerant to flow in from the outside and allows the first refrigerant to flow through one or some of the plurality of the first-refrigerant passages (2),
- one or more first-refrigerant dividing-and-communicating-hole turn-back portions (4bb) that allows the first refrigerant that has passed through the one or some of the first-refrigerant passages (2) to flow back through a portion of the first-refrigerant passages (2) other than the one or some of the first refrigerant passages, and
- a first-refrigerant dividing-and-communicating-hole outflow portion (4ba) that allows the first refrigerant that has flowed from the one or more first-tefrigerant dividing-and-communicating-hole turn-back portions (4bb) and passed through the portion of the first-refrigerant passages (2) to flow to the outside, and
- the first refrigerant flows so as to flow back through the first-refrigerant passages (2) of the first-refrigerant passage group.

12. The heat exchanger of any one of claims 1 to 8 and 11,
wherein
at least one of the second-refrigerant communicating portions (5) that are formed at the both ends of the second-refrigerant passage group in the refrigerant flow direction is divided into a plurality of portions, the second-refrigerant communicating portions (5) include
- a second-refrigerant dividing-and-communicating-portion inflow portion (5ba) that allows the second refrigerant to flow in from the outside and allows the second refrigerant to flow through one or some of the plurality of the second-refrigerant passages (3),
- one or more second-refrigerant dividing-and-communicating-portion turn-back portions (5bb) that allow the second refrigerant that has passed through the one or some of the second-refrigerant passages (3) to flow back through a portion of the second-refrigerant passages (3) other than the one or some of the second-refrigerant passages (3), and
- a second-refrigerant dividing-and-communicating-portion outflow portion (5ba) that allows the second refrigerant that has flowed from the one or more second-refrigerant dividing-and-communicating-portion turn-back portions (5bb) and passed through the portion of the second-refrigerant passages (3) to flow to the outside, and
- the second refrigerant flows so as to flow back through the second-refrigerant passages (3) of the second-refrigerant passage group.

13. The heat exchanger of any one of claims 1 to 12,
wherein the first refrigerant and the second refrigerant flow counter to each other in at least a portion of the refrigerant passages.

14. A refrigeration cycle apparatus
including the heat exchanger of any one of claims 1 to 13.

## Patentansprüche

1. Wärmetauscher, der Folgendes aufweist:
- einen Wärmeübertragungsblock (1), der aus Metall besteht und so ausgebildet ist, dass er von einer Primär-Kältemittel-Kanalgruppe durchdrungen wird, wobei die Primär-Kältemittel-Kanalgruppe eine Vielzahl von Primär-Kältemittel-Kanälen (2) aufweist, durch die ein erstes Kältemittel hindurchströmt, wobei die Primär-Kältemittel-Kanäle (2) parallel zueinander und in einer Reihe angeordnet sind;
- Sekundär-Kältemittel-Wärmeübertragungsrohre (3a), die aus Metall bestehen, das von demjenigen des Wärmeübertragungsblocks (1) verschieden ist, und die so konfiguriert sind, dass sie eine Sekundär-Kältemittel-Kanalgruppe bilden, welche eine Vielzahl von Sekundär-Kältemittel-Kanälen (2) aufweist, durch die ein zweites Kältemittel strömt, wobei die Sekundär-Kältemittel-Wärmeübertragungsrohre (3a) durch eine Vielzahl von Sekundär-Kältemittel-Wärmeübertragungsrohr-Einführungslöcher (3b) eingesetzt sind, die parallel zueinander und in einer Reihe ausgebildet sind, so dass sie der Primär-Kältemittel-Kanalgruppe benachbart sind, wobei die Sekundär-Kältemittel-Wärmeübertragungsrohr-Einführungslöcher (3b) so ausgebildet sind, dass sie den Wärmeübertragungsblock (1) durchdringen;
- Sekundär-Kältemittel-Verbindungs-Sammelrohre, die so ausgebildet sind, dass sie Sekundär-Kältemittel-Verbindungsbereiche (5) bilden, wobei die Sekundär-Kältemittel-Verbindungs-Sammelrohre mit den entsprechenden beiden Enden der Sekundär-Kältemittel-Wärmeübertragungsrohre (3a) in der Richtung entlang der Reihe der Vielzahl von Sekundär-Kältemittel-Wärmeübertragungsrohren (3a) derart verbunden sind, dass sie mit sämtlichen Sekundär-Kältemittel-Wärmeübertragungsrohren (3a) in Verbindung stehen, wobei das zweite Kältemittel in die und aus den Sekundär-Kältemittel-Verbindungsbereichen (5) strömt und durch die Sekundär-Kältemittel-Kanalgruppe strömt, und wobei eine Innenwandfläche der Primär-Kältemittel-Kanäle (2) und eine Innenwandfläche der Sekundär-Kältemittel-Kanäle (3) aus voneinander verschiedenen Typen von Metall ausgebildet sind,
**dadurch gekennzeichnet,**
- **dass** Primär-Kältemittel-Verbindungslöcher (4) an beiden Enden der Primär-Kältemittel-Kanalgruppe in der Kältemittel-Strömungsrichtung in dem Wärmeübertragungsblock (1) in der Richtung entlang der Reihe der Vielzahl von Primär-Kältemittel-Kanälen (2) ausgebildet sind, wobei die Primär-Kältemittel-Verbindungslöcher (4) mit der Vielzahl der Primär-Kältemittel-Kanäle (2) in Verbindung steht,
- wobei das erste Kältemittel in die und aus den Primär-Kältemittel-Verbindungslöchern (4) strömt und durch die Primär-Kältemittel-Kanalgruppe strömt, und
- wobei die Strömungsrichtungen der Primär-Kältemittel-Kanalgruppe und der Sekundär-Kältemittel-Kanalgruppe parallel zueinander sind, wobei die Primär-Kältemittel-Kanalgruppe und die Sekundär-Kältemittel-Kanalgruppe einander benachbart mit einer Trennwand dazwischen angeordnet sind und Wärme zwischen dem Primärkältemittel und dem Sekundär-Kältemittel über die Trennwand austauschen.

2. Wärmetauscher nach Anspruch 1,
wobei jedes Sekundär-Kältemittel-Wärmeübertragungsrohr (3a), das durch ein entsprechendes Sekundär-Kältemittel-Wärmeübertragungsrohr-Einführungsloch (3b) eingesetzt worden ist, ausgedehnt ist und mit einer Innenwandfläche des Sekundär-Kältemittel-Wärmeübertragungsrohr-Einführungsloches (3b) verbunden ist.

3. Wärmetauscher nach Anspruch 1 oder 2,
wobei konkav-konvexe Nuten in einer Innenfläche von jedem der Sekundär-Kältemittel-Wärmeübertragungsrohr-Einführungslöcher (3b) ausgebildet sind.

4. Wärmetauscher nach Anspruch 1 oder 3, wenn dieser von Anspruch 1 abhängig ist,
wobei eine Hartlotmaterial-Anordnungsnut zum Anordnen eines Hartlotmaterials in einer Innenfläche von jedem der Sekundär-Kältemittel-Wärmeübertragungsrohr-Einführungslöcher (3b) in einer Längsrichtung davon ausgebildet ist, und
wobei jedes Sekundär-Kältemittel-Wärmeübertragungsrohr-Einführungsloch (3b) und das entsprechende Sekundär-Kältemittel-Wärmeübertragungsrohr (3a) miteinander verbunden werden, dass sie durch das Hartlotmaterial, das man in einen Raum zwischen dem Sekundär-Kältemittel-Wärmeübertragungsrohr (3a) und dem Sekundär-Kältemittel-Wärmeübertragungsrohr-Einführungsloch (3b) einströmen lässt, durch Schmelzen befestigt werden.

5. Wärmetauscher nach einem der Ansprüche 1 bis 4,
wobei die Primär-Kältemittel-Kanalgruppe eine von einer Vielzahl von Primär-Kältemittel-Kanalgruppen ist und wobei die Primär-Kältemittel-Kanalgruppen einander benachbart angeordnet sind, und
wobei die Primär-Kältemittel-Verbindungslöcher (4) mit sämtlichen der Primär-Kältemittel-Kanälen (2) in Verbindung stehen, die in der Vielzahl der Primär-Kältemittel-Kanalgruppen enthalten sind.

6. Wärmetauscher nach einem der Ansprüche 1 bis 5,
wobei die Sekundär-Kältemittel-Kanalgruppe eine von der Vielzahl von Sekundär-Kältemittel-Kanalgruppen ist und wobei die Sekundär-Kältemittel-Kanalgruppen einander benachbart angeordnet sind, und wobei die Sekundär-Kältemittel-Verbindungsbereiche (5) mit sämtlichen Sekundär-Kältemittel-Kanälen (3) in Verbindung stehen, die in der Vielzahl der Sekundär-Kältemittel-Kanalgruppen enthalten sind.

7. Wärmetauscher nach einem der Ansprüche 1 bis 3,
wobei
- die Primär-Kältemittel-Kanalgruppe und die Sekundär-Kältemittel-Kanalgruppe jeweils eine von einer Vielzahl von Primär-Kältemittel-Kanalgruppen und einer Vielzahl von Sekundär-Kältemittel-Kanalgruppen sind,
- die Primär-Kältemittel-Kanalgruppen und die Sekundär-Kältemittel-Kanalgruppen abwechselnd und einander benachbart angeordnet sind,
- die Primär-Kältemittel-Verbindungslöcher (4) an beiden Enden von jeder Gruppe der Primär-Kältemittel-Kanalgruppen in der Kältemittel-Strömungsrichtung ausgebildet sind,
- die Sekundär-Kältemittel-Verbindungsbereiche (5) an beiden Enden von jeder Gruppe der Sekundär-Kältemittel-Kanalgruppen in der Kältemittel-Strömungsrichtung ausgebildet sind,
- erste Sammelbereiche (6) in der Richtung einer Kolonne der Vielzahl von Primär-Kältemittel-Verbindungslöchern (4) ausgebildet sind, die am gleichen Ende der Kältemittel-Strömungsrichtung der Primär-Kältemittel-Kanalgruppen parallel zueinander angeordnet sind, wobei jeder der ersten Sammelbereiche (6) mit der Vielzahl der Primär-Kältemittel-Verbindungslöcher (4) in Verbindung steht, und die zweiten Sammelbereiche (7) in der Richtung einer Kolonne der Vielzahl von Sekundär-Kältemittel-Verbindungsbereichen (5) ausgebildet sind, die am gleichen Ende der Kältemittel-Strömungsrichtung der Sekundär-Kältemittel-Verbindungsbereiche (5) parallel zueinander angeordnet sind, wobei jeder der zweiten Sammelbereiche (7) mit der Vielzahl der Sekundär-Kältemittel-Verbindungsbereiche (5) in Verbindung steht,
- das erste Kältemittel in den und aus dem ersten Sammelbereich (6) strömt und durch die Primär-Kältemittel-Verbindungslöcher (4) und die Primär-Kältemittel-Kanalgruppen strömt, und
- das zweite Kältemittel in den und aus dem zweiten Sammelbereich (7) strömt und durch die Sekundär-Kältemittel-Verbindungsbereiche (5) und die Sekundär-Kältemittel-Kanalgruppen strömt.

8. Wärmetauscher nach Anspruch 7,
wobei die Primär-Kältemittel-Kanalgruppe und die Sekundär-Kältemittel-Kanalgruppe einander benachbart angeordnet sind und als Einzelmodul konfiguriert sind, und
wobei eine Vielzahl der Module gestapelt und miteinander verbunden ist.

9. Wärmetauscher nach Anspruch 7 oder 8,
wobei mindestens einer der ersten Sammelbereiche (6), die an beiden Enden der Primär-Kältemittel-Kanalgruppen in der Kältemittel-Strömungsrichtung ausgebildet sind, in eine Vielzahl von Bereichen unterteilt ist, wobei die ersten Sammelbereiche (6) Folgendes aufweisen:
- einen Primär-Kältemittel-Teilungs- und -Sammelbereich-Einströmungsbereich (6ba), der es ermöglicht, dass das erste Kältemittel von außen hineinströmt, und es ermöglicht, dass das erste Kältemittel durch eines oder mehrere von der Vielzahl der Primär-Kältemittel-Verbindungslöchern (4) strömt und durch die Primär-Kältemittel-Kanalgruppen strömt, die mit dem einen oder mehreren von der Primär-Kältemittel-Verbindungslöchern in Verbindung stehen,
- einen oder mehrere Primär-Kältemittel-Teilungs- und -Sammel-bereich-Rücklaufbereiche (6bb), die es ermöglichen, dass das erste Kältemittel, das durch einen Teil der Primär-Kältemittel-Kanalgruppen und durch die Primär-Kältemittel-Verbindungslöcher (4) geströmt ist, die mit dem Teil der Primär-Kältemittel-Kanalgruppen in Verbindung stehen, durch einen Teil der Primär-Kältemittel-Verbindungslöcher (4) zurückströmt, die andere sind als das eine oder die mehreren der Primär-Kältemittel-Verbindungslöcher (4), und durch die Primär-Kältemittel-Kanalgruppen strömt, die mit dem Teil der Primär-Kältemittel-Verbindungslöcher (4) in Verbindung stehen, die andere sind als das eine oder die mehreren der Primär-Kältemittel-Verbindungslöcher, und
- einen Primär-Kältemittel-Unterteilungs- und -Sammel-Ausströmungs-bereich (6ba), der es ermöglicht, dass das erste Kältemittel, das von dem einen oder den mehreren Primär-Kältemittel-Unterteilungs- und -Sammelbereich-Rücklaufbereichen (6bb) durch den Teil der Primär-Kältemittel-Verbindungslöcher (4) und durch die Primär-Kältemittel-Kanalgruppen, die mit dem Teil der Primär-Kältemittel-Verbindungslöcher (4) in Verbindung stehen, geströmt ist, zur Außenseite ausströmt; und
- das erste Kältemittel derart strömt, dass es durch die Primär-Kältemittel-Kanalgruppen zurückströmt.

10. Wärmetauscher nach einem der Ansprüche 7 bis 9,
wobei mindestens einer der zweiten Sammelbereiche (7), die an beiden Enden der Sekundär-Kältemittel-Kanalgruppen in der Kältemittel-Strömungsrichtung ausgebildet sind, in eine Vielzahl von Bereichen unterteilt ist,
wobei die zweiten Sammelbereiche (7) Folgendes aufweisen:
- einen Sekundär-Kältemittel-Teilungs- und -Sammelbereich-Einströmungsbereich, der es ermöglicht, dass das zweite Kältemittel von der Außenseite einströmt, und es ermöglicht, dass das zweite Kältemittel durch einen oder mehrere der Vielzahl von Sekundär-Kältemittel-Verbindungsbereichen (5) und durch die Sekundär-Kältemittel-Kanalgruppen strömt, die mit dem einen oder mehreren der Vielzahl von Sekundär-Kältemittel-Verbindungsbereichen (5) in Verbindung stehen,
- einen oder mehrere Sekundär-Kältemittel-Unterteilungs- und -Sammelbereich-Rücklaufbereiche, die es ermöglichen, dass das zweite Kältemittel, das durch einen Teil der Sekundär-Kältemittel-Kanalgruppen und die Sekundär-Kältemittel-Verbindungsbereiche (5) geströmt ist, die mit dem Teil der Sekundär-Kältemittel-Kanalgruppen in Verbindung stehen, durch einen Teil der Sekundär-Kältemittel-Verbindungsbereiche (5) zurückströmt, die andere sind als der eine oder die mehreren der Sekundär-Kältemittel-Verbindungsbereiche (5), und durch die Sekundär-Kältemittel-Kanalgruppen strömt, die mit dem Teil der Sekundär-Kältemittel-Verbindungsbereiche in Verbindung stehen, die andere sind als der eine oder die mehreren der Sekundär-Kältemittel-Verbindungsbereiche (5), und
- einen Sekundär-Kältemittel-Unterteilungs- und -Sammelbereich-Ausströmungsbereich, der es ermöglicht, dass das zweite Kältemittel, das aus dem einen oder den mehreren von Sekundär-Kältemittel-Unterteilungs- und -Sammelbereich-Rücklaufbereichen durch den Bereich der Sekundär-Kältemittel-Verbindungsbereiche (5) und durch die Sekundär-Kältemittel-Kanalgruppen geströmt ist, die mit dem Teil der Sekundär-Kältemittel-Verbindungsbereiche (5) in Verbindung stehen, zur Außenseite hin ausströmt, und
- das zweite Kältemittel derart strömt, dass es durch die Sekundär-Kältemittel-Kanalgruppen zurückströmt.

11. Wärmetauscher nach einem der Ansprüche 1 bis 8,
wobei mindestens eines der Primär-Kältemittel-Verbindungslöcher (4), die an beiden Enden der Primär-Kältemittel-Kanalgruppe in der Kältemittel-Strömungsrichtung ausgebildet sind, in eine Vielzahl von Bereichen unterteilt sind,
wobei die Primär-Kältemittel-Verbindungslöcher Folgendes aufweisen:
- einen Primär-Kältemittel-Unterteilungs- und -Verbindungsloch-Einströmungsbereich (4ba), der es ermöglicht, dass das erste Kältemittel von der Außenseite einströmt, und es ermöglicht, dass das erste Kältemittel durch einen oder mehrere der Vielzahl von Primär-Kältemittel-Kanälen (2) strömt,
- einen oder mehrere Primär-Kältemittel-Unterteilungs- und -Verbindungsloch-Rücklaufbereiche (4bb), die es ermöglichen, dass das erste Kältemittel, das durch den einen oder die mehreren von Primär-Kältemittel-Kanälen (2) geströmt ist, durch einen Teil der Primär-Kältemittel-Kanäle (2) zurückströmt, die andere sind als der eine oder die mehreren der Primär-Kältemittel-Kanäle, und
- einen Primär-Kältemittel-Unterteilungs- und -Verbindungsloch-Ausströmungsbereich (4ba), der es ermöglicht, dass das erste Kältemittel, das aus dem einen oder den mehreren Primär-Kältemittel-Unterteilungs- und -Verbindungsloch-Rücklaufbereichen (4bb) ausgeströmt ist und durch den Teil der Primär-Kältemittel-Kanäle (2) geströmt ist, nach außen strömt, und
- das erste Kältemittel derart strömt, dass es durch die Primär-Kältemittel-Kanäle (2) der Primär-Kältemittel-Kanalgruppe zurückströmt.

12. Wärmetauscher nach einem der Ansprüche 1 bis 8 und 11,
wobei mindestens einer der Primär-Kältemittel-Verbindungsbereiche (5a), die an beiden Enden der Sekundär-Kältemittel-Kanalgruppe in der Kältemittel-Strömungsrichtung ausgebildet sind, in eine Vielzahl von Bereichen unterteilt ist, wobei die Sekundär-Kältemittel-Verbindungsbereiche (5) Folgendes aufweisen:
- einen Sekundär-Kältemittel-Unterteilungs- und -Verbindungsbereich-Einströmungsbereich (5ba), der es ermöglicht, dass das zweite Kältemittel von der Außenseite einströmt, und es ermöglicht, dass das zweite Kältemittel durch einen oder mehrere der Vielzahl der Sekundär-Kältemittel-Kanäle (3) strömt,
- einen oder mehrere Sekundär-Kältemittel-Unterteilungs- und -Verbindungsbereich-Rücklaufbereiche (5bb), die es ermöglichen, dass das zweite Kältemittel, das durch den einen oder die mehreren der Sekundär-Kältemittel-Kanäle (3) geströmt ist, durch einen Teil der Sekundär-Kältemittel-Kanäle (3) zurückströmt, die andere sind als der eine oder die mehreren der Sekundär-Kältemittel-Kanäle (3), und
- einen Sekundär-Kältemittel-Unterteilungs- und -Verbindungsbereich-Ausströmungsbereich (5ba), der es ermöglicht, dass das zweite Kältemittel, das von dem einen oder den mehreren Sekundär-Kältemittel-Unterteilungs- und Verbindungsbereich-Rücklaufbereichen (5bb) geströmt ist und durch den Teil der Sekundär-Kältemittel-Kanäle (3) geströmt ist, nach außen strömt, und
- das zweite Kältemittel derart strömt, dass es durch die Sekundär-Kältemittel-Kanäle (3) der Sekundär-Kältemittel-Kanalgruppe zurückströmt.

13. Wärmetauscher nach einem der Ansprüche 1 bis 12,
wobei das erste Kältemittel und das zweite Kältemittel gegenläufig zueinander zumindest in einem Teil der Kältemittel-Kanäle gegenläufig zueinander strömen.

14. Kühlkreislaufvorrichtung,
die einen Wärmetauscher nach einem der Ansprüche 1 bis 13 aufweist.

## Revendications

1. Échangeur de chaleur, comprenant:
- un bloc de transfert de chaleur (1) réalisé en métal et formé en étant pénétré par un groupe de passages pour premier réfrigérant, le groupe de passages pour premier réfrigérant incluant une pluralité de passages pour premier réfrigérant (2) à travers lesquels s'écoule un premier réfrigérant, les passages pour premier réfrigérant (2) étant agencés en parallèle les uns avec les autres et dans une rangée;
- des tubes de transfert de chaleur (3a) pour second réfrigérant, réalisés en métal différent de celui du bloc de transfert de chaleur (1) et configurés pour constituer un groupe de passages pour second réfrigérant incluant une pluralité de passages pour second réfrigérant (3) à travers lesquels s'écoule un second réfrigérant, les tubes de transfert de chaleur (3a) pour second réfrigérant étant insérés à travers une pluralité de trous d'insertion pour tubes de transfert de chaleur (3b) pour second réfrigérant formés en parallèle et dans une rangée de manière à être adjacents au groupe de passages pour premier réfrigérant, les trous d'insertion pour tubes de transfert de chaleur (3b) pour second réfrigérant étant formes par pénétration à travers le bloc de transfert de chaleur (1);
- des conduits de liaison de communication pour second réfrigérant configurés pour constituer des portions de communication pour second réfrigérant (5), les conduits de liaison de communication pour second réfrigérant étant réunis aux deux extrémités respectives des tubes de transfert de chaleur (3a) pour second réfrigérant le long d'une direction en rangées de la pluralité de tubes de transfert de chaleur (3a) pour second réfrigérant de manière à être en communication avec tous les tubes de transfert de chaleur (3a) pour second réfrigérant; dans lequel
- le second réfrigérant s'écoule en entrant et en sortant des portions de communication pour second réfrigérant (5) et s'écoule à travers le groupe de passages pour second réfrigérant, et
- une surface de paroi intérieure des passages pour premier réfrigérant (2) et une surface de paroi intérieure des passages pour second réfrigérant (3) sont réalisées de types de métaux différents l'une par rapport à l'autre,
**caractérisé en ce que**
- des trous de communication pour premier réfrigérant (4) sont formés aux deux extrémités du groupe de passages pour premier réfrigérant dans une direction d'écoulement du réfrigérant dans le bloc de transfert de chaleur (1) le long d'une direction en rangées de la pluralité de passages pour premier réfrigérant (2), les trous de communication pour premier réfrigérant (4) étant en communication avec la pluralité de passages pour premier réfrigérant (2), dans lequel
- le premier réfrigérant s'écoule en entrant et en sortant des trous de communication pour premier réfrigérant (4) et s'écoule à travers le groupe de passages pour premier réfrigérant,
- les directions d'écoulement du groupe de passages pour premier réfrigérant et du groupe de passages pour second réfrigérant sont parallèles, le groupe de passages pour premier réfrigérant et le groupe de passages pour second réfrigérant étant agencés adjacents les uns aux autres avec une paroi de cloison entre eux et échangeant de la chaleur entre le premier réfrigérant et le second réfrigérant via la paroi de cloison.

2. Échangeur de chaleur selon la revendication 1,
dans lequel chaque tube de transfert de chaleur pour second réfrigérant (3a) qui a été inséré à travers un trou d'insertion correspondant pour tube de transfert de chaleur (3b) pour second réfrigérant est expansé et est réuni à une surface de paroi intérieure du trou d'insertion pour tube de transfert de chaleur (3b) pour second réfrigérant.

3. Échangeur de chaleur selon la revendication 1 ou 2,
dans lequel des rainures concaves/convexes sont formées sur une surface intérieure de chacun des trous d'insertion pour tubes de transfert de chaleur (3b) pour second réfrigérant.

4. Échangeur de chaleur selon la revendication 1 ou 3,
prise en dépendance de la revendication 1,
dans lequel
- une rainure d'installation de matériau de brasage pour disposer un matériau de brasage est formée sur une surface intérieure de chacun des trous d'insertion pour tubes de transfert de chaleur (3b) pour second réfrigérant, dans une direction longitudinale de ceux-ci, et
- chaque trou d'insertion pour tube de transfert de chaleur (3b) pour second réfrigérant et le tube de transfert de chaleur pour second réfrigérant (3a) correspondant sont réunis ensemble en étant fixés par le matériau de brasage qui s'écoule jusque dans un espace entre le tube de transfert de chaleur pour second réfrigérant (3a) et le trou d'insertion pour tube de transfert de chaleur (3b) pour second réfrigérant, par fusion.

5. Échangeur de chaleur selon l'une quelconque des revendications 1 à 4,
dans lequel
le groupe de passages pour premier réfrigérant est un groupe parmi une pluralité de groupes de passages pour premier réfrigérant et les groupes de passages pour premier réfrigérant sont disposés adjacents les uns aux autres, et
les trous de communication pour premier réfrigérant (4) sont en communication avec tous les passages pour premier réfrigérant (2) inclus dans la pluralité de groupes de passages pour premier réfrigérant.

6. Échangeur de chaleur selon l'une quelconque des revendications à a 5,
dans lequel
le groupe de passages pour second réfrigérant est un groupe parmi la pluralité de groupes de passages pour second réfrigérant et les groupes de passages pour second réfrigérant sont disposés adjacents les uns aux autres, et
les portions de communication pour second réfrigérant (5) sont en communication avec tous les passages pour second réfrigérant (3) inclus dans la pluralité de groupes de passages pour second réfrigérant.

7. Échangeur de chaleur selon l'une quelconque des revendications 1 à 3,
dans lequel
- le groupe de passages pour premier réfrigérant et le groupe de passages pour second réfrigérant sont chacun un groupe parmi une pluralité de groupes de passages pour premier réfrigérant et une pluralité de groupes de passages pour second réfrigérant,
- les groupes de passages pour premier réfrigérant et les groupes de passages pour second réfrigérant sont agencés alternativement et adjacents les uns aux autres,
- les trous de communication pour premier réfrigérant (4) sont formés aux deux extrémités de chaque groupe des groupes de passages pour premier réfrigérant dans la direction d'écoulement du réfrigérant,
- les portions de communication pour second réfrigérant (5) sont formées aux deux extrémités de chaque groupe des groupes de passages pour second réfrigérant dans la direction d'écoulement du réfrigérant,
- des premières portions de collecte (6) sont formées dans une direction en colonne de la pluralité de trous de communication pour premier réfrigérant (4) qui sont disposées parallèles à la même extrémité de la direction d'écoulement du réfrigérant des groupes de passages pour premier réfrigérant, chacune des premières portions de collecte (6) étant en communication avec la pluralité de trous de communication pour premier réfrigérant (4), et des secondes portions de collecte (7) sont formées dans une direction en colonne de la pluralité de portions de communication pour second réfrigérant (5) qui sont disposées parallèles à la même extrémité de la direction d'écoulement du réfrigérant des portions de communication pour second réfrigérant (5), chacune des secondes portions de collecte (7) étant en communication avec la pluralité de portions de communication pour second réfrigérant (5),
- le premier réfrigérant s'écoule en entrant et en sortant de la première portion de collecte (6) et s'écoule à travers les trous de communication pour premier réfrigérant (4) et les groupes de passages pour premier réfrigérant, et
- le second réfrigérant s'écoule en entrant et en sortant de la seconde portion de collecte (7) et s'écoule à travers les portions de communication pour second réfrigérant (5) et les groupes de passages pour second réfrigérant.

8. Échangeur de chaleur selon la revendication 7,
dans lequel le groupe de passages pour premier réfrigérant et le groupe de passages pour second réfrigérant qui sont agencés adjacents l'un à l'autre sont configurés comme un module unique, et
une pluralité de modules sont empilés et réunis les uns aux autres.

9. Échangeur de chaleur selon la revendication 7 ou 8,
dans lequel
au moins une des premières portions de collecte (6) qui sont formées aux deux extrémités des groupes de passages pour premier réfrigérant dans la direction d'écoulement du réfrigérant est divisée en une pluralité de portions,
les premières portions de collecte (6) incluant
- une portion d'écoulement entrant formant portion de division et le collecte pour premier réfrigérant (6ba) qui permet au premier réfrigérant de s'écouler en entrant depuis l'extérieur et qui permet au premier réfrigérant de s'écouler à travers un ou quelques-uns de la pluralité de trous de communication pour premier réfrigérant (4) et à travers les groupes de passages pour premier réfrigérant qui sont en communication avec ledit trou ou lesdits quelques-uns trous de la pluralité de trous de communication pour premier réfrigérant,
- une ou plusieurs portions de retour formant portions de division et de collecte pour premier réfrigérant (6bb) qui permettent au premier réfrigérant qui est passé à travers une partie du groupe de passages pour premier réfrigérant et les trous de communication pour premier réfrigérant (4) qui sont en communication avec la partie des groupes de passages pour premier réfrigérant de s'écouler en retour à travers une portion des trous de communication pour premier réfrigérant (4) autres que ledit un ou lesdits quelques-uns trous de communication pour premier réfrigérant (4) et à travers les groupes de passages pour premier réfrigérant qui sont en communication avec la portion des trous de communication pour premier réfrigérant (4) autres que ledit un ou lesdits quelques-uns trous de communication pour premier réfrigérant, et
- une première portion d'écoulement sortant formant portion de division et de collecte pour premier réfrigérant (6ba) qui permet au premier réfrigérant qui s'est écoulé depuis ladite une ou plusieurs portion de retour formant portions de division et de collecte pour premier réfrigérant (6bb) à travers la portion des trous de communication pour premier réfrigérant (4) et à travers les groupes de passages pour premier réfrigérant qui sont en communication avec la portion des trous de communication pour premier réfrigérant (4) pour s'écouler vers l'extérieur, et
- le premier réfrigérant s'écoule de manière à retourner via les groupes de passages pour premier réfrigérant.

10. Échangeur de chaleur selon l'une quelconque des revendications 7 à 9,
dans lequel
au moins une des secondes portions de collecte (7) qui sont formées aux deux extrémités des groupes de passages pour second réfrigérant dans la direction d'écoulement du réfrigérant est divisée en une pluralité de portions, les secondes portions de collecte (7) incluant
- une portion d'écoulement entrant formant portion de division et de collecte pour second réfrigérant qui permet au second réfrigérant de s'écouler en entrant depuis l'extérieur et qui permet au second réfrigérant de s'écouler à travers une ou quelques-unes de la pluralité des portions de communication pour second réfrigérant (5) et à travers les groupes de passages pour seconds réfrigérants qui sont en communication avec ladite une ou lesdits quelques-unes de la pluralité de portions de communication pour second réfrigérant (5),
- une ou plusieurs portions de retour formant portions de division et de collecte pour second réfrigérant qui permettent au second réfrigérant qui est passé à travers une partie des groupes de passages pour second réfrigérant et les portions de communication pour second réfrigérant (5) qui sont en communication avec la partie des groupes de passages pour second réfrigérant de s'écouler en retour à travers une portion des portions de communication pour second réfrigérant (5) autres que ladite une ou lesdites quelques-unes portions de communication pour second réfrigérant (5) et à travers les groupes de passages pour second réfrigérant qui sont en communication avec la portion des portions de communication pour second réfrigérant (5) autres que ladite une ou lesdites quelques-unes des portions de communication pour second réfrigérant (5), et
- une portion d'écoulement sortant formant portion de division et de collecte pour second réfrigérant qui permet au second réfrigérant qui s'est écoulé depuis lesdites une ou plusieurs portions de retour formant portions de division et de collecte pour second réfrigérant à travers la portion des portions de communication pour second réfrigérant (5) et à travers les groupes de passages pour second réfrigérant qui sont en communication avec la portion des portions de communication pour second réfrigérant (5) de s'écouler vers l'extérieur, et
- le second réfrigérant s'écoule de manière à retourner via les groupes de passages pour second réfrigérant.

11. Échangeur de chaleur selon l'une quelconque des revendications 1 à 8,
dans lequel
au moins un des trous de communication pour premier réfrigérant (4) qui sont formés aux deux extrémités du groupe de passages pour premier réfrigérant dans la direction d'écoulement du réfrigérant est divisé en une pluralité de portions, les trous de communication pour premier réfrigérant (4) incluant
- une portion d'écoulement entrant formant trou de division et de communication pour premier réfrigérant (4ba) qui permet au premier réfrigérant de s'écouler en entrant depuis l'extérieur et permet au premier réfrigérant de s'écouler à travers un ou quelques-uns de la pluralité de passages pour premier réfrigérant (2),
- une ou plusieurs portions de retour formant trous de division et de communication pour premier réfrigérant (4bb) qui permettent au premier réfrigérant qui est passé à travers ledit un ou lesdits quelques-uns passages pour premier réfrigérant (2) de s'écouler en retour à travers une portion des passages pour premier réfrigérant (2) autres que ledit un ou lesdits quelques-uns passages pour premier réfrigérant, et
- une portion d'écoulement sortant formant trou de division et de communication pour premier réfrigérant (4ba) qui permet au premier réfrigérant qui s'est écoulé depuis lesdites une ou plusieurs portions de retour formant trous de division et de communication pour premier réfrigérant (4bb) et qui est passé à travers la portion des passages pour premier réfrigérant (2) de s'écouler vers l'extérieur, et
- le premier réfrigérant s'écoule de manière à s'écouler en retour à travers les passages pour premier réfrigérant (2) du groupe de passages pour premier réfrigérant.

12. Échangeur de chaleur selon l'une quelconque des revendications 1 à 8 et 11,
dans lequel
au moins une des portions de communication pour second réfrigérant (5) qui sont formées aux deux extrémités du groupe de passages pour second réfrigérant dans la direction d'écoulement du réfrigérant est divisée en une pluralité de portions, les portions de communication pour second réfrigérant (5) incluant
- une seconde portion d'écoulement entrant formant portion de division et de communication pour second réfrigérant (5ba) qui permet au second réfrigérant de s'écouler en entrant depuis l'extérieur et qui permet au second réfrigérant de s'écouler à travers un ou quelques-uns de la pluralité de passages pour second réfrigérant (3),
- une ou plusieurs portions de retour formant portion de division et de communication pour second réfrigérant (5bb) qui permettent au second réfrigérant qui est passé à travers ledit un ou lesdits quelques-uns passages pour second réfrigérant (3) de s'écouler en retour à travers une portion des passages pour second réfrigérant (3) autres que ledit un ou lesdits quelques-uns passages pour second réfrigérant (3), et
- une seconde portion d'écoulement sortant formant portion de division et de communication pour second réfrigérant (5ba) qui permet au second réfrigérant qui s'est écoulé depuis lesdites une ou plusieurs portions de retour formant portion de division et de communication pour second réfrigérant (5bb) et qui est passé à travers la portion des passages pour second réfrigérant (3) de s'écouler vers l'extérieur, et
- le second réfrigérant s'écoule de manière à retourner via les passages pour second réfrigérant (3) du groupe de passages pour second réfrigérant.

13. Échangeur de chaleur selon l'une quelconque des revendications 1 à 12, dans lequel l'écoulement du premier réfrigérant et l'écoulement du second réfrigérant sont en sens contraire l'un de l'autre dans au moins une portion des passages pour réfrigérant.

14. Appareil à cycle de réfrigération incluant l'échangeur de chaleur selon l'une quelconque des revendications 1 à 13.
